(19) **Europäisches Patentamt / European Patent Office / Office européen des brevets**

(11) **EP 4 668 902 A1**

(12) # EUROPEAN PATENT APPLICATION
published in accordance with Art. 153(4) EPC

(43) Date of publication:
**24.12.2025 Bulletin 2025/52**

(21) Application number: **24757326.4**

(22) Date of filing: **16.02.2024**

(51) International Patent Classification (IPC):
$H04W\ 52/14^{(2009.01)}$    $H04W\ 52/10^{(2009.01)}$
$H04W\ 52/36^{(2009.01)}$    $H04W\ 52/54^{(2009.01)}$
$H04W\ 72/231^{(2023.01)}$    $H04L\ 27/00^{(2006.01)}$

(52) Cooperative Patent Classification (CPC):
H04L 27/00; H04W 52/10; H04W 52/14;
H04W 52/36; H04W 52/54; H04W 72/231

(86) International application number:
**PCT/KR2024/095324**

(87) International publication number:
**WO 2024/172610 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.02.2023 KR 20230021336**

(71) Applicant: **LG Electronics Inc.**
**Yeongdeungpo-gu**
**Seoul 07336 (KR)**

(72) Inventors:
• **BAE, Duckhyun**
  **Seoul 06772 (KR)**
• **SHIN, Seokmin**
  **Seoul 06772 (KR)**
• **KO, Hyunsoo**
  **Seoul 06772 (KR)**

(74) Representative: **Maikowski & Ninnemann**
**Patentanwälte Partnerschaft mbB**
**Postfach 15 09 20**
**10671 Berlin (DE)**

(54) **METHOD, USER EQUIPMENT, PROCESSING DEVICE, AND STORAGE MEDIUM FOR TRANSMITTING UPLINK SIGNAL, AND METHOD AND BASE STATION FOR RECEIVING UPLINK SIGNAL**

(57) The UE may: receive a first power control parameter value for a first type waveform and a second power control parameter value for a second type waveform; detect a DCI format for scheduling a PUSCH; determine a waveform for the PUSCH and transmission power for the PUSCH on the basis of a first DCI format; and transmit the PUSCH using the transmission power. Based on that a transform precoder indicator value in the first DCI format has a first value, the transmission power for the PUSCH may be determined on the basis of the first power control parameter value. Based on that the transform precoder indicator value in the first DCI format has a second value, the transmission power for the PUSCH may be determined on the basis of the second power control parameter value.

**FIG. 18**

```
Receive power control parameter per waveform                        — S1801
                            ↓
Receive UL grant with DWS indicator                                 — S1803
                            ↓
Determine power control parameter for UL transmission
based on DWS indicator                                              — S1805
```

EP 4 668 902 A1

**Description**

**TECHNICAL FIELD**

The present disclosure relates to a wireless communication system.

**BACKGROUND**

A variety of technologies, such as machine-to-machine (M2M) communication, machine type communication (MTC), and a variety of devices demanding high data throughput, such as smartphones and tablet personal computers (PCs), have emerged and spread. Accordingly, the volume of data throughput demanded to be processed in a cellular network has rapidly increased. In order to satisfy such rapidly increasing data throughput, carrier aggregation technology or cognitive radio technology for efficiently employing more frequency bands and multiple input multiple output (MIMO) technology or multi-base station (BS) cooperation technology for raising data capacity transmitted on limited frequency resources have been developed.

As more and more communication devices have required greater communication capacity, there has been a need for enhanced mobile broadband (eMBB) communication relative to legacy radio access technology (RAT). In addition, massive machine type communication (mMTC) for providing various services at anytime and anywhere by connecting a plurality of devices and objects to each other is one main issue to be considered in next-generation communication.

Communication system design considering services/user equipment (UEs) sensitive to reliability and latency is also under discussion. The introduction of next-generation RAT is being discussed in consideration of eMBB communication, mMTC, ultra-reliable and low-latency communication (URLLC), and the like.

**DISCLOSURE**

**Technical Problem**

An object of the present disclosure is to provide a method and apparatus for controlling uplink transmission power by considering a waveform.

Another object of the present disclosure is to provide a method and apparatus for performing power headroom reporting by considering a waveform.

The objects to be achieved with the present disclosure are not limited to what has been particularly described hereinabove and other objects not described herein will be more clearly understood by persons skilled in the art from the following detailed description.

**Technical Solution**

In an aspect of the present disclosure, a method for transmitting an uplink signal by a user equipment (UE) in a wireless communication system is provided. The method includes receiving a first power control parameter value for a first-type waveform and a second power control parameter value for a second-type waveform, detecting a downlink control information (DCI) format that schedules a physical uplink shared channel (PUSCH), determining a waveform for the PUSCH and transmission power for the PUSCH based on the first DCI format, and transmitting the PUSCH with the transmission power. Based on a transform precoder indicator value within the first DCI format being a first value, the transmission power for the PUSCH may be determined based on the first power control parameter value, and based on the transform precoder indicator value within the first DCI format being a second value, the transmission power for the PUSCH may be determined based on the second power control parameter value.

In another aspect of the present disclosure, a UE for transmitting an uplink signal in a wireless communication system is provided. The UE includes at least one transceiver, at least one processor, and at least one computer memory operably connectable to the at least one processor and storing instructions which, when executed, cause the at least one processor to perform operations. The operations include receiving a first power control parameter value for a first-type waveform and a second power control parameter value for a second-type waveform, detecting a DCI format that schedules a PUSCH, determining a waveform for the PUSCH and transmission power for the PUSCH based on the first DCI format, and transmitting the PUSCH with the transmission power. Based on a transform precoder indicator value within the first DCI format being a first value, the transmission power for the PUSCH may be determined based on the first power control parameter value, and based on the transform precoder indicator value within the first DCI format being a second value, the transmission power for the PUSCH may be determined based on the second power control parameter value.

In another aspect of the present disclosure, a processing device in a wireless communication system is provided.

The processing device includes at least one processor, and at least one computer memory operably connectable to the at least one processor and storing instructions which, when executed, cause the at least one processor to perform operations. The operations include receiving a first power control parameter value for a first-type waveform and a second power control parameter value for a second-type waveform, detecting a DCI format that schedules a PUSCH, determining a waveform for the PUSCH and transmission power for the PUSCH based on the first DCI format, and transmitting the PUSCH with the transmission power. Based on a transform precoder indicator value within the first DCI format being a first value, the transmission power for the PUSCH may be determined based on the first power control parameter value, and based on the transform precoder indicator value within the first DCI format being a second value, the transmission power for the PUSCH may be determined based on the second power control parameter value.

In another aspect of the present disclosure, a computer-readable storage medium is provided. The storage medium stores at least one program code including instructions which, when executed, cause at least one processor to perform operations, and the operations include receiving a first power control parameter value for a first-type waveform and a second power control parameter value for a second-type waveform, detecting a DCI format that schedules a PUSCH, determining a waveform for the PUSCH and transmission power for the PUSCH based on the first DCI format, and transmitting the PUSCH with the transmission power. Based on a transform precoder indicator value within the first DCI format being a first value, the transmission power for the PUSCH may be determined based on the first power control parameter value, and based on the transform precoder indicator value within the first DCI format being a second value, the transmission power for the PUSCH may be determined based on the second power control parameter value.

In another aspect of the present disclosure, a method for receiving an uplink signal from a UE by a base station (BS) in a wireless communication system is provided. The method includes transmitting a first power control parameter value for a first-type waveform and a second power control parameter value for a second-type waveform, transmitting a DCI format that schedules a PUSCH, and receiving the PUSCH based on the first DCI format. Based on a transform precoder indicator value within the first DCI format being a first value, the PUSCH may be received in the first-type waveform, and based on the transform precoder indicator value within the first DCI format being a second value, the PUSCH may be received in the second-type waveform.

In another aspect of the present disclosure, a BS for receiving an uplink signal from a UE in a wireless communication system is provided. The BS includes at least one transceiver, at least one processor, and at least one computer memory operably connectable to the at least one processor and storing instructions which, when executed, cause the at least one processor to perform operations. The operations include transmitting a first power control parameter value for a first-type waveform and a second power control parameter value for a second-type waveform, transmitting a DCI format that schedules a PUSCH, and receiving the PUSCH based on the first DCI format. Based on a transform precoder indicator value within the first DCI format being a first value, the PUSCH may be received in the first-type waveform, and based on the transform precoder indicator value within the first DCI format being a second value, the PUSCH may be received in the second-type waveform.

In each aspect of the present disclosure, based on the transform precoder indicator value within the first DCI format being the first value, transform precoding may be applied to the PUSCH.

In each aspect of the present disclosure, based on the transform precoder indicator value within the first DCI format being the second value, transform precoding may not be applied to the PUSCH.

In each aspect of the present disclosure, the first-type waveform may be discrete Fourier transform-spread-orthogonal frequency division multiplexing (DFT-s-OFDM), and the second type waveform may be cyclic prefix-orthogonal frequency division multiplexing (CP-OFDM).

In each aspect of the present disclosure, the method of the UE or the operations in the UE, the processing device, or the storage medium may further include detecting a second DCI format including PUSCH-related transmit power control (TPC) commands.

In each aspect of the present disclosure, the method of the BS or the operations in the BS may further include transmitting a second DCI format including PUSCH-related TPC commands. The PUSCH-related TPC commands may include a first TPC command for the first-type waveform and a second TPC command for the second-type waveform.

In each aspect of the present disclosure, the PUSCH-related TPC commands may include the first TPC command for the first-type waveform and the second TPC command for the second-type waveform. Based on the transform precoder indicator value within the first DCI format being the first value, the transmission power for the PUSCH may be adjusted using the first TPC command, and based on the transform precoder indicator value within the first DCI format being the second value, the transmission power for the PUSCH may be adjusted using the second TPC command.

The foregoing solutions are merely a part of the examples of the present disclosure and various examples into which the technical features of the present disclosure are incorporated may be derived and understood by persons skilled in the art from the following detailed description.

Advantageous Effects

According to some implementations of the present disclosure, uplink power transmission may be controlled appropriately for a waveform.

According to some implementations of the present disclosure, a more accurate power headroom may be reported.

The effects according to the present disclosure are not limited to what has been particularly described hereinabove and other effects not described herein will be more clearly understood by persons skilled in the art related to the present disclosure from the following detailed description.

## BRIEF DESCRIPTION OF THE DRAWINGS

The accompanying drawings, which are included to provide a further understanding of the present disclosure, illustrate examples of implementations of the present disclosure and together with the detailed description serve to explain implementations of the present disclosure:

The accompanying drawings, which are included to provide a further understanding of the present disclosure, illustrate examples of implementations of the present disclosure and together with the detailed description serve to explain implementations of the present disclosure:

FIG. 1 illustrates an example of a communication system 1 to which implementations of the present disclosure are applied;

FIG. 2 is a block diagram illustrating examples of communication devices capable of performing a method according to the present disclosure;

FIG. 3 illustrates another example of a wireless device capable of performing implementation(s) of the present disclosure;

FIG. 4 illustrates an example of a frame structure used in a 3rd generation partnership project (3GPP)-based wireless communication system;

FIG. 5 illustrates a resource grid of a slot;

FIG. 6 illustrates physical channels and a signal transmission/reception procedure using the physical channels in a 3rd generation partnership project based (3GPP-based) communication system as an exemplary wireless communication system;

FIG. 7 illustrates random access procedures applicable to implementation(s) of the present disclosure;

FIG. 8 illustrates an example of physical downlink shared channel (PDSCH) time domain resource assignment (TDRA) by a physical downlink control channel (PDCCH) and an example of physical uplink shared channel (PUSCH) TDRA by the PDCCH;

FIG. 9 illustrates a receiver block for OFDM using a cyclic prefix (CP); FIG. 10 illustrates a receiver block for discrete Fourier transform (DFT)-spread-OFDM (DFT-s-OFDM);

FIG. 11 illustrates a power headroom reporting process;

FIG. 12 illustrates a method for determining a power headroom (PH) value;

FIGS. 13 and 14 illustrate UL transmissions used to calculate a PH value for a serving cell in some implementations of the present disclosure;

FIG. 15 illustrates an exemplary UE operation flow according to some implementations of the present disclosure;

FIG. 16 illustrates an exemplary BS operation flow according to some implementations of the present disclosure;

FIG. 17 illustrates a signal transmission/reception flow between a UE and a BS according to some implementations of the present disclosure;

FIG. 18 illustrates a UL signal transmission flow in a UE, to which some implementations of the present disclosure are applicable; and

FIG. 19 illustrates a UL signal reception flow in a BS, to which some implementations of the present disclosure are applicable.

## DETAILED DESCRIPTION

Hereinafter, implementations according to the present disclosure will be described in detail with reference to the accompanying drawings. The detailed description, which will be given below with reference to the accompanying drawings, is intended to explain exemplary implementations of the present disclosure, rather than to show the only implementations that may be implemented according to the present disclosure. The following detailed description includes specific details in order to provide a thorough understanding of the present disclosure. However, it will be apparent to those skilled in the art that the present disclosure may be practiced without such specific details.

In some instances, known structures and devices may be omitted or may be shown in block diagram form, focusing on important features of the structures and devices, so as not to obscure the concept of the present disclosure. The same reference numbers will be used throughout the present disclosure to refer to the same or like parts.

A technique, a device, and a system described below may be applied to a variety of wireless multiple access systems. The multiple access systems may include, for example, a code division multiple access (CDMA) system, a frequency division multiple access (FDMA) system, a time division multiple access (TDMA) system, an orthogonal frequency division multiple access (OFDMA) system, a single-carrier frequency division multiple access (SC-FDMA) system, a multi-carrier frequency division multiple access (MC-FDMA) system, etc. CDMA may be implemented by radio technology such as universal terrestrial radio access (UTRA) or CDMA2000. TDMA may be implemented by radio technology such as global system for mobile communications (GSM), general packet radio service (GPRS), enhanced data rates for GSM evolution (EDGE) (i.e., GERAN), etc. OFDMA may be implemented by radio technology such as institute of electrical and electronics engineers (IEEE) 802.11 (Wi-Fi), IEEE 802.16 (WiMAX), IEEE 802.20, evolved-UTRA (E-UTRA), etc. UTRA is part of universal mobile telecommunications system (UMTS) and 3rd generation partnership project (3GPP) long-term evolution (LTE) is part of E-UMTS using E-UTRA. 3GPP LTE adopts OFDMA on downlink (DL) and adopts SC-FDMA on uplink (UL). LTE-advanced (LTE-A) is an evolved version of 3GPP LTE.

For convenience of description, description will be given under the assumption that the present disclosure is applied to LTE and/or new RAT (NR). However, the technical features of the present disclosure are not limited thereto. For example, although the following detailed description is given based on mobile communication systems corresponding to 3GPP LTE/NR systems, the mobile communication systems are applicable to other arbitrary mobile communication systems except for matters that are specific to the 3GPP LTE/NR system.

For terms and techniques that are not described in detail among terms and techniques used in the present disclosure, reference may be made to 3GPP based standard specifications, for example, 3GPP TS 36.211, 3GPP TS 36.212, 3GPP TS 36.213, 3GPP TS 36.321, 3GPP TS 36.300, 3GPP TS 36.331, 3GPP TS 37.213, 3GPP TS 38.211, 3GPP TS 38.212, 3GPP TS 38.213, 3GPP TS 38.214, 3GPP TS 38.300, 3GPP TS 38.304, 3GPP TS 38.331, etc.

In examples of the present disclosure described later, if a device "assumes" something, this may mean that a channel transmission entity transmits a channel in compliance with the corresponding "assumption". This also may mean that a channel reception entity receives or decodes the channel in the form of conforming to the "assumption" on the premise that the channel has been transmitted in compliance with the "assumption".

In the present disclosure, a user equipment (UE) may be fixed or mobile. Each of various devices that transmit and/or receive user data and/or control information by communicating with a base station (BS) may be the UE. The term UE may be referred to as terminal equipment, mobile station (MS), mobile terminal (MT), user terminal (UT), subscriber station (SS), wireless device, personal digital assistant (PDA), wireless modem, handheld device, etc. In the present disclosure, a BS refers to a fixed station that communicates with a UE and/or another BS and exchanges data and control information with a UE and another BS. The term BS may be referred to as advanced base station (ABS), Node-B (NB), evolved Node-B (eNB), base transceiver system (BTS), access point (AP), processing server (PS), etc. Particularly, a BS of a universal terrestrial radio access (UTRAN) is referred to as an NB, a BS of an evolved-UTRAN (E-UTRAN) is referred to as an eNB, and a BS of new radio access technology network is referred to as a gNB. Hereinbelow, for convenience of description, the NB, eNB, or gNB will be referred to as a BS regardless of the type or version of communication technology.

In the present disclosure, a node refers to a fixed point capable of transmitting/receiving a radio signal to/from a UE by communication with the UE. Various types of BSs may be used as nodes regardless of the names thereof. For example, a BS, NB, eNB, pico-cell eNB (PeNB), home eNB (HeNB), relay, repeater, etc. may be a node. Furthermore, a node may not be a BS. For example, a radio remote head (RRH) or a radio remote unit (RRU) may be a node. Generally, the RRH and RRU have power levels lower than that of the BS. Since the RRH or RRU (hereinafter, RRH/RRU) is connected to the BS through a dedicated line such as an optical cable in general, cooperative communication according to the RRH/RRU and the BS may be smoothly performed relative to cooperative communication according to BSs connected through a wireless link. At least one antenna is installed per node. An antenna may refer to a physical antenna port or refer to a virtual antenna or an antenna group. The node may also be called a point.

In the present disclosure, a cell refers to a specific geographical area in which one or more nodes provide communication services. Accordingly, in the present disclosure, communication with a specific cell may mean communication with a BS or a node providing communication services to the specific cell. A DL/UL signal of the specific cell refers to a DL/UL signal from/to the BS or the node providing communication services to the specific cell. A cell providing UL/DL communication services to a UE is especially called a serving cell. Furthermore, channel status/quality of the specific cell refers to channel status/quality of a channel or a communication link generated between the BS or the node providing communication services to the specific cell and the UE. In 3GPP-based communication systems, the UE may measure a DL channel state from a specific node using cell-specific reference signal(s) (CRS(s)) transmitted on a CRS resource and/or channel state information reference signal(s) (CSI-RS(s)) transmitted on a CSI-RS resource, allocated to the specific node by antenna port(s) of the specific node.

A 3GPP-based communication system uses the concept of a cell in order to manage radio resources, and a cell related with the radio resources is distinguished from a cell of a geographic area.

The "cell" of the geographic area may be understood as coverage within which a node may provide services using a carrier, and the "cell" of the radio resources is associated with bandwidth (BW), which is a frequency range configured by the carrier. Since DL coverage, which is a range within which the node is capable of transmitting a valid signal, and UL coverage, which is a range within which the node is capable of receiving the valid signal from the UE, depend upon a carrier carrying the signal, coverage of the node may also be associated with coverage of the "cell" of radio resources used by the node. Accordingly, the term "cell" may be used to indicate service coverage by the node sometimes, radio resources at other times, or a range that a signal using the radio resources may reach with valid strength at other times.

In 3GPP communication standards, the concept of the cell is used in order to manage radio resources. The "cell" associated with the radio resources is defined by a combination of DL resources and UL resources, that is, a combination of a DL component carrier (CC) and a UL CC. The cell may be configured by the DL resources only or by the combination of the DL resources and the UL resources. If carrier aggregation is supported, linkage between a carrier frequency of the DL resources (or DL CC) and a carrier frequency of the UL resources (or UL CC) may be indicated by system information. For example, the combination of the DL resources and the UL resources may be indicated by system information block type 2 (SIB2) linkage. In this case, the carrier frequency may be equal to or different from a center frequency of each cell or CC. When carrier aggregation (CA) is configured, the UE has only one radio resource control (RRC) connection with a network. During RRC connection establishment/re-establishment/handover, one serving cell provides non-access stratum (NAS) mobility information. During RRC connection re-establishment/handover, one serving cell provides security input. This cell is referred to as a primary cell (Pcell). The Pcell refers to a cell operating on a primary frequency on which the UE performs an initial connection establishment procedure or initiates a connection re-establishment procedure. According to UE capability, secondary cells (Scells) may be configured to form a set of serving cells together with the Pcell. The Scell may be configured after completion of RRC connection establishment and used to provide additional radio resources in addition to resources of a specific cell (SpCell). A carrier corresponding to the Pcell on DL is referred to as a downlink primary CC (DL PCC), and a carrier corresponding to the Pcell on UL is referred to as an uplink primary CC (UL PCC). A carrier corresponding to the Scell on DL is referred to as a downlink secondary CC (DL SCC), and a carrier corresponding to the Scell on UL is referred to as an uplink secondary CC (UL SCC).

In a dual connectivity (DC) operation, the term special cell (SpCell) refers to a Pcell of a master cell group (MCG) or a primary secondary cell (PSCell) of a secondary cell group (SCG). The SpCell supports PUCCH transmission and contention-based random access and is always activated. The MCG is a group of service cells associated with a master node (e.g., BS) and includes the SpCell (Pcell) and optionally one or more Scells. For a UE configured with DC, the SCG is a subset of serving cells associated with a secondary node and includes the PSCell and 0 or more Scells. The PSCell is a primary Scell of the SCG. For a UE in RRC_CONNECTED state, that is not configured with CA or DC, only one serving cell including only the Pcell is present. For a UE in RRC_CONNECTED state, that is configured with CA or DC, the term serving cells refers to a set of cells including SpCell(s) and all Scell(s). In DC, two medium access control (MAC) entities, i.e., one MAC entity for the MCG and one MAC entity for the SCG, are configured for the UE.

For a UE that is configured with CA and is not configured with DC, a Pcell PUCCH group (also called a primary PUCCH group) including the Pcell and 0 or more Scells and an Scell PUCCH group (also called a secondary PUCCH group) including only Scell(s) may be configured. For the Scell, an Scell on which a PUCCH associated with the corresponding cell is transmitted (hereinafter, a PUCCH Scell) may be configured. An Scell for which a PUCCH Scell is indicated belongs to the Scell PUCCH group (i.e., the secondary PUCCH group) and PUCCH transmission of related uplink control information (UCI) is performed on the PUCCH Scell. If a PUCCH Scell is not indicated for an Scell or a cell which is indicated for PUCCH transmission for the Scell is a Pcell, the Scell belongs to the Pcell PUCCH group (i.e., the primary PUCCH group) and PUCCH transmission of related UCI is performed on the Pcell. Hereinbelow, if the UE is configured with the SCG and some implementations of the present disclosure related to a PUCCH are applied to the SCG, the primary cell may refer to the PSCell of the SCG. If the UE is configured with the PUCCH Scell and some implementations of the present disclosure related to the PUCCH are applied to the secondary PUCCH group, the primary cell may refer to the PUCCH Scell of the secondary PUCCH group.

In a wireless communication system, the UE receives information on DL from the BS and the UE transmits information on UL to the BS. The information that the BS and UE transmit and/or receive includes data and a variety of control information and there are various physical channels according to types/usage of the information that the UE and the BS transmit and/or receive.

The 3GPP-based communication standards define DL physical channels corresponding to resource elements carrying information originating from a higher layer and DL physical signals corresponding to resource elements which are used by the physical layer but do not carry the information originating from the higher layer. For example, a physical downlink shared channel (PDSCH), a physical broadcast channel (PBCH), a physical multicast channel (PMCH), a physical control format indicator channel (PCFICH), a physical downlink control channel (PDCCH), etc. are defined as the DL physical channels, and a reference signal (RS) and a synchronization signal (SS) are defined as the DL physical signals. The RS, which is also referred to as a pilot, represents a signal with a predefined special waveform known to both the BS and the UE. For example, a demodulation reference signal (DMRS), a channel state information RS (CSI-RS), and etc. are defined as DL RSs. The 3GPP-based communication standards define UL physical channels corresponding to resource elements carrying information originating from the higher layer and UL physical signals corresponding to resource elements which are used by the physical layer but do not carry the information originating from the higher layer. For example, a physical uplink shared channel (PUSCH), a physical uplink control channel (PUCCH), and a physical random access channel (PRACH) are defined as the UL physical channels, and a DMRS for a UL control/data signal, a sounding reference signal (SRS) used for UL channel measurement, etc. are defined.

In the present disclosure, a PDCCH refers to a set of time-frequency resources (e.g., resource elements (REs)) carrying downlink control information (DCI), and a PDSCH refers to a set of time-frequency resources carrying DL data. A PUCCH, a PUSCH, and a PRACH refer to a set of time-frequency resources carrying UCI, a set of time-frequency resources carrying UL data, and a set of time-frequency resources carrying random access signals, respectively. In the following description, "the UE transmits/receives a PUCCH/PUSCH/PRACH" is used as the same meaning that the UE transmits/receives the UCI/UL data/random access signals on or through the PUCCH/PUSCH/PRACH, respectively. In addition, "the BS transmits/receives a PBCH/PDCCH/PDSCH" is used as the same meaning that the BS transmits the broadcast information/DCI/DL data on or through a PBCH/PDCCH/PDSCH, respectively.

In this specification, a radio resource (e.g., a time-frequency resource) scheduled or configured to the UE by the BS for transmission or reception of the PUCCH/PUSCH/PDSCH may be referred to as a PUCCH/PUSCH/PDSCH resource.

Since a communication device receives a synchronization signal block (SSB), DMRS, CSI-RS, PBCH, PDCCH, PDSCH, PUSCH, and/or PUCCH in the form of radio signals on a cell, the communication device may not select and receive radio signals including only a specific physical channel or a specific physical signal through a radio frequency (RF) receiver, or may not select and receive radio signals without a specific physical channel or a specific physical signal through the RF receiver. In actual operations, the communication device receives radio signals on the cell via the RF receiver, converts the radio signals, which are RF band signals, into baseband signals, and then decodes physical signals and/or physical channels in the baseband signals using one or more processors. Thus, in some implementations of the present disclosure, not receiving physical signals and/or physical channels may mean that a communication device does not attempt to restore the physical signals and/or physical channels from radio signals, for example, does not attempt to decode the physical signals and/or physical channels, rather than that the communication device does not actually receive the radio signals including the corresponding physical signals and/or physical channels.

As more and more communication devices have required greater communication capacity, there has been a need for eMBB communication relative to legacy radio access technology (RAT). In addition, massive MTC for providing various services at anytime and anywhere by connecting a plurality of devices and objects to each other is one main issue to be considered in next-generation communication. Further, communication system design considering services/UEs sensitive to reliability and latency is also under discussion. The introduction of next-generation RAT is being discussed in consideration of eMBB communication, massive MTC, ultra-reliable and low-latency communication (URLLC), and the like. Currently, in 3GPP, a study on the next-generation mobile communication systems after EPC is being conducted. In the present disclosure, for convenience, the corresponding technology is referred to a new RAT (NR) or fifth-generation (5G) RAT, and a system using NR or supporting NR is referred to as an NR system.

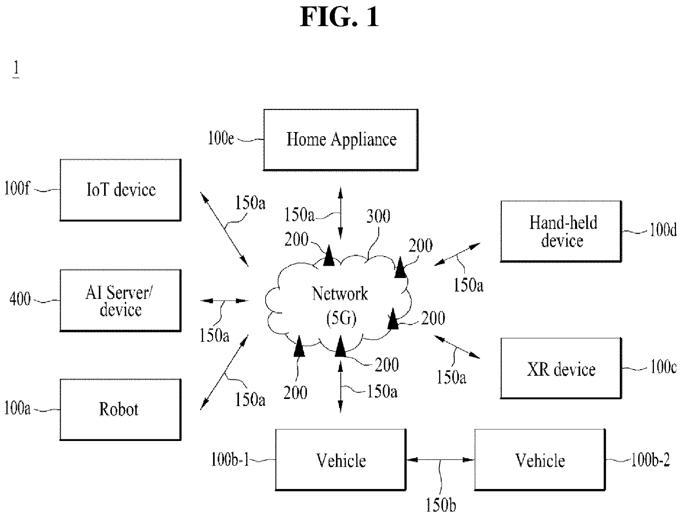

FIG. 1 illustrates an example of a communication system 1 to which implementations of the present disclosure are applied. Referring to FIG. 1, the communication system 1 applied to the present disclosure includes wireless devices, BSs, and a network. Here, the wireless devices represent devices performing communication using RAT (e.g., 5G NR or LTE (e.g., E-UTRA)) and may be referred to as communication/radio/SG devices. The wireless devices may include, without being limited to, a robot 100a, vehicles 100b-1 and 100b-2, an extended reality (XR) device 100c, a hand-held device 100d, a home appliance 100e, an Internet of Things (IoT) device 100f, and an artificial intelligence (AI) device/server 400. For example, the vehicles may include a vehicle having a wireless communication function, an autonomous driving vehicle, and a vehicle capable of performing vehicle-to-vehicle communication. Here, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may also be implemented as wireless devices and a specific wireless may operate as a BS/network node with respect to another wireless device.

The wireless devices 100a to 100f may be connected to a network 300 via BSs 200. AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. vehicle-to-vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a and 150b may be established between the wireless devices 100a to 100f and the BSs 200 and between the wireless devices 100a to 100f). Here, the wireless communication/connections such as UL/DL communication 150a and sidelink communication 150b (or, device-to-device (D2D) communication) may be established by various RATs (e.g., 5G NR). The wireless devices and the BSs/wireless devices may transmit/receive radio signals to/from each other through the wireless communication/connections 150a and 150b. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

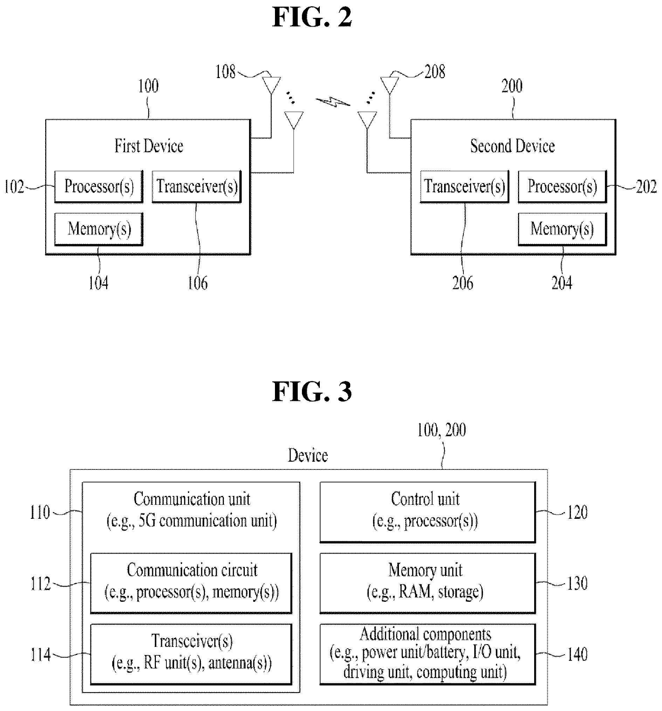

FIG. 2 is a block diagram illustrating examples of communication devices capable of performing a method according to the present disclosure. Referring to FIG. 2, a first wireless device 100 and a second wireless device 200 may transmit and/or receive radio signals through a variety of RATs (e.g., LTE and NR). Here, {the first wireless device 100 and the second wireless device 200} may correspond to {the wireless device 100x and the BS 200} and/or {the wireless device 100x and the wireless device 100x} of FIG. 1.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the below-described /proposed functions, procedures, and/or methods. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver(s) 106 and then store information obtained by processing the second information/signals in the memory(s) 104. The memory(s) 104 may be connected to the processor(s) 102 and may store a variety of information related to operations of the processor(s) 102. For example, the memory(s) 104 may perform a part or all of processes controlled by the processor(s) 102 or store software code including instructions for performing the below-described/-proposed procedures and/or methods. Here, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 is used interchangeably with radio frequency (RF) unit(s). In the present disclosure, the wireless device may represent the communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the below-described/proposed functions, procedures, and/or methods. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may perform a part or all of processes controlled by the processor(s) 202 or store software code including instructions for performing the below-described/-proposed procedures and/or methods. Here, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 is used interchangeably with RF unit(s). In the present disclosure, the wireless device may represent the communication modem/circuit/chip.

The wireless communication technology implemented in the wireless devices 100 and 200 of the present disclosure may include narrowband Internet of things for low-power communication as well as LTE, NR, and 6G. For example, the NB-IoT technology may be an example of low-power wide-area network (LPWAN) technologies and implemented in standards such as LTE Cat NB1 and/or LTE Cat NB2. However, the NB-IoT technology is not limited to the above names. Additionally or alternatively, the wireless communication technology implemented in the wireless devices XXX and YYY of the present disclosure may perform communication based on the LTE-M technology. For example, the LTE-M technology may be an example of LPWAN technologies and called by various names including enhanced machine type communication (eMTC). For example, the LTE-M technology may be implemented in at least one of the following various standards: 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, etc., but the LTE-M technology is not limited to the above names. Additionally or alternatively, the wireless communication technology implemented in the wireless devices XXX and YYY of the present disclosure may include at least one of ZigBee, Bluetooth, and LPWAN in consideration of low-power communication, but the wireless communication technology is not limited to the above names. For example, the ZigBee technology may create a personal area network (PAN) related to small/low-power digital communication based on various standards such as IEEE 802.15.4 and so on, and the ZigBee technology may be called by various names.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as a physical (PHY) layer, medium access control (MAC) layer, a radio link control (RLC) layer, a packet data convergence protocol (PDCP) layer, radio resource control (RRC) layer, and a service data adaptation protocol (SDAP) layer). The one or more processors 102 and 202 may generate one or more protocol data units (PDUs) and/or one or more service data units (SDUs) according to the functions, procedures, proposals, and/or methods disclosed in the present disclosure. The one or more processors 102 and 202 may generate messages, control information, data, or information according to the functions, procedures, proposals, and/or methods disclosed in the present disclosure. The one or more processors 102 and 202 may generate signals (e.g., baseband signals) including PDUs, SDUs, messages, control information, data, or information according to the functions, procedures, proposals, and/or methods disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the functions, procedures, proposals, and/or methods disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The functions, procedures, proposals, and/or methods disclosed in the present disclosure may be implemented using firmware or software, and the firmware or software may be configured to include the modules, procedures, or functions. Firmware or software configured to perform the functions, procedures, proposals, and/or methods disclosed in the present disclosure may be included in the one or more processors 102 and 202 or stored in the one or more memories 104 and 204 so as to be driven by the one or more processors 102 and 202. The functions, procedures, proposals, and/or methods disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, commands, and/or instructions. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of the present disclosure, to one or more other devices. The one or more transceivers 106 and 206 may receive user data, control information, and/or radio signals/channels, mentioned in the functions, procedures, proposals, methods, and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208. The one or more transceivers 106 and 206 may be configured to transmit and receive user data, control information, and/or radio signals/channels, mentioned in the functions, procedures, proposals, methods, and/or operational flowcharts disclosed in the present disclosure, through the one or more antennas 108 and 208. In the present disclosure, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 3 illustrates another example of a wireless device capable of performing implementation(s) of the present disclosure. Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 2. For example, the transceiver(s) 114 may include the one or more transceivers 106 and 206 and/or the one or more antennas 108 and 208 of FIG. 2. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast UE, a hologram device, a public safety device, an MTC device, a medicine device, a fintech device (or a finance device), a security device, a climate/environment device, the AI server/device (400 of FIG. 1), the BS (200 of FIG. 1), a network node, etc. The wireless device may be used in a mobile or fixed place according to a use-case/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an electronic control unit (ECU), a graphical processing unit, and a memory control processor. As another example, the memory 130 may be configured by a random access memory (RAM), a dynamic RAM (DRAM), a read-only memory (ROM)), a flash memory, a transitory memory, a non-transitory memory, and/or a combination thereof.

In the present disclosure, the at least one memory (e.g., 104 or 204) may store instructions or programs, and the instructions or programs may cause, when executed, at least one processor operably connected to the at least one memory to perform operations according to some embodiments or implementations of the present disclosure.

In the present disclosure, a computer readable (non-transitory) storage medium may store at least one instruction or program, and the at least one instruction or program may cause, when executed by at least one processor, the at least one processor to perform operations according to some embodiments or implementations of the present disclosure.

In the present disclosure, a processing device or apparatus may include at least one processor, and at least one computer memory operably connected to the at least one processor. The at least one computer memory may store instructions or programs, and the instructions or programs may cause, when executed, the at least one processor operably connected to the at least one memory to perform operations according to some embodiments or implementations of the present disclosure.

In the present disclosure, a computer program may include program code stored on at least one computer-readable (non-transitory) storage medium and, when executed, configured to perform operations according to some implementations of the present disclosure or cause at least one processor to perform the operations according to some implementations of the present disclosure. The computer program may be provided in the form of a computer program product. The computer program product may include at least one computer-readable (non-transitory) storage medium.

A communication device of the present disclosure includes at least one processor; and at least one computer memory operably connected to the at least one processor and configured to store instructions for causing, when executed, the at least one processor to perform operations according to example(s) of the present disclosure described later.

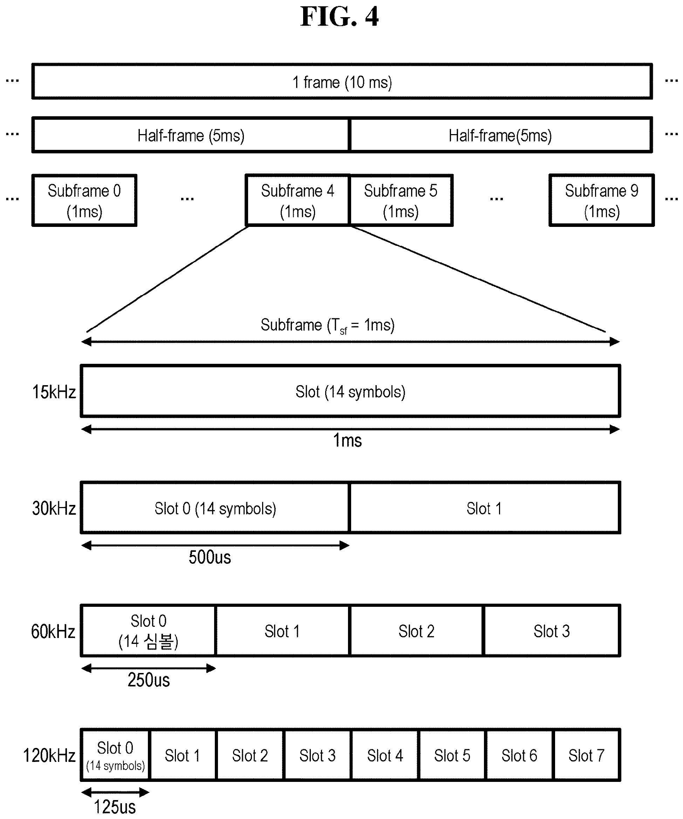

FIG. 4 illustrates an example of a frame structure used in a 3GPP-based wireless communication system.

The frame structure of FIG. 4 is purely exemplary and the number of subframes, the number of slots, and the number of symbols, in a frame, may be variously changed. In an NR system, different OFDM numerologies (e.g., subcarrier spacings (SCSs)) may be configured for multiple cells which are aggregated for one UE. Accordingly, the (absolute time) duration of a time resource including the same number of symbols (e.g., a subframe, a slot, or a transmission time interval (TTI)) may be differently configured for the aggregated cells. Here, the symbol may include an OFDM symbol (or cyclic prefix - OFDM (CP-OFDM) symbol) and an SC-FDMA symbol (or discrete Fourier transform-spread-OFDM (DFT-s-OFDM) symbol). In the present disclosure, the symbol, the OFDM-based symbol, the OFDM symbol, the CP-OFDM symbol, and the DFT-s-OFDM symbol are used interchangeably.

Referring to FIG. 4, in the NR system, UL and DL transmissions are organized into frames. Each frame has a duration of $T_f = (\triangle f_{max}*N_f/100)*T_c = 10$ ms and is divided into two half-frames of 5 ms each. A basic time unit for NR is $T_c = 1/(\triangle f_{max}*N_f)$ where $\triangle f_{max} = 480*10^3$ Hz and $N_f = 4096$. For reference, a basic time unit for LTE is $T_s = 1/(\triangle f_{ref}*N_{f,ref})$ where $\triangle f_{ref} = 15*10^3$ Hz and $N_{f,ref} = 2048$. $T_s$ and $T_c$ have the relationship of a constant $\kappa = T_s/T_c = 64$. Each half-frame includes 5 subframes and a duration $T_{sf}$ of a single subframe is 1 ms. Subframes are further divided into slots and the number of slots in a subframe depends on a subcarrier spacing. Each slot includes 14 or 12 OFDM symbols based on a cyclic prefix. In a normal CP, each slot includes 14 OFDM symbols and, in an extended CP, each slot includes 12 OFDM symbols. The numerology depends on an exponentially scalable subcarrier spacing $\triangle f = 2^u*15$ kHz. The table below shows the number of OFDM symbols ($N^{slot}_{symb}$) per slot, the number of slots ($N^{frame,u}_{slot}$) per frame, and the number of slots ($N^{subframe,u}_{slot}$) per subframe.

Table 1

| $u$ | $N^{slot}_{symb}$ | $N^{frame,u}_{slot}$ | $N^{subframe,u}_{slot}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

The table below shows the number of OFDM symbols per slot, the number of slots per frame, and the number of slots per subframe, according to the subcarrier spacing $\triangle f = 2^u*15$ kHz.

Table 2

| $u$ | $N^{slot}_{symb}$ | $N^{frame,u}_{slot}$ | $N^{subframe,u}_{slot}$ |
|---|---|---|---|
| 2 | 12 | 40 | 4 |

For a subcarrier spacing configuration u, slots may be indexed within a subframe in ascending order as follows: $n^u_s \in \{0, ..., n^{subframe,u}_{slot} - 1\}$ and indexed within a frame in ascending order as follows: $n^u_{s,f} \in \{0, ..., n^{frame,u}_{slot} - 1\}$.

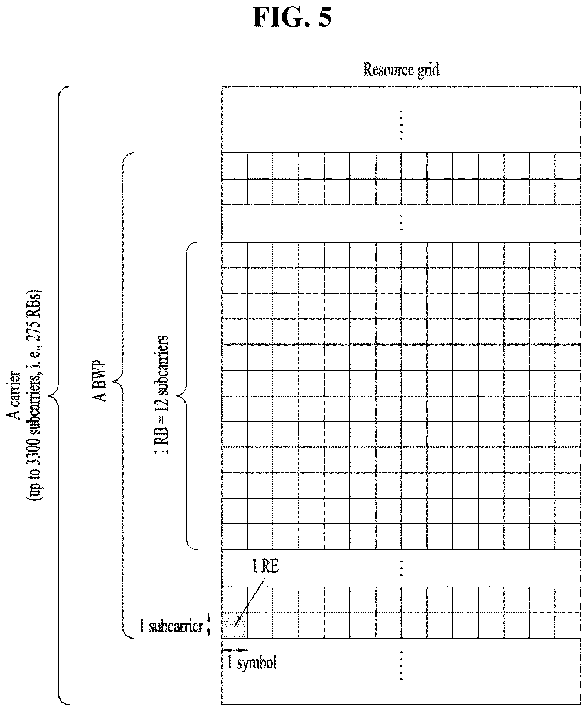

FIG. 5 illustrates a resource grid of a slot. The slot includes multiple (e.g., 14 or 12) symbols in the time domain. For each numerology (e.g., subcarrier spacing) and carrier, a resource grid of $N^{size,u}_{grid,x}*N^{RB}_{sc}$ subcarriers and $N^{subframe,u}_{symb}$ OFDM symbols is defined, starting at a common resource block (CRB) $N^{start,u}_{grid}$ indicated by higher layer signaling (e.g. RRC signaling), where $N^{size,u}_{grid,x}$ is the number of resource blocks (RBs) in the resource grid and the subscript x is DL for downlink and UL for uplink. $N^{RB}_{sc}$ is the number of subcarriers per RB. In the 3GPP-based wireless communication system, $N^{RB}_{sc}$ is typically 12. There is one resource grid for a given antenna port $p$, a subcarrier spacing configuration $u$, and a transmission link (DL or UL). The carrier bandwidth $N^{size,u}_{grid}$ for the subcarrier spacing configuration u is given to the UE by a higher layer parameter (e.g. RRC parameter). Each element in the resource grid for the antenna port $p$ and the subcarrier spacing configuration $u$ is referred to as a resource element (RE) and one complex symbol may be mapped to each RE. Each RE in the resource grid is uniquely identified by an index $k$ in the frequency domain and an index $l$ representing a symbol location relative to a reference point in the time domain. In the NR system, an RB is defined by 12 consecutive subcarriers in the frequency domain. In the NR system, RBs are classified into CRBs and physical resource blocks (PRBs). The CRBs are numbered from 0 upwards in the frequency domain for the subcarrier spacing configuration $u$. The center of subcarrier 0 of CRB 0 for the subcarrier spacing configuration $u$ is equal to 'Point A' which serves as a common reference point for RB grids. The PRBs for subcarrier spacing configuration u are defined within a bandwidth part (BWP) and numbered from 0 to $N^{size,u}_{BWP,i}-1$, where i is a number of the BWP. The relation between a PRB $n_{PRB}$ in a BWP i and a CRB $n^u_{CRB}$ is given by: $n^u_{PRB} = n^u_{CRB} + N^{size,u}_{BWP,i}$, where $N^{size}_{BWP,i}$ is a CRB in which the BWP starts relative to CRB 0. The BWP includes a plurality of consecutive RBs in the frequency domain. For example, the BWP may be a subset of contiguous CRBs defined for a given numerology $u_i$ in the BWP i on a given carrier. A carrier may include a maximum of N (e.g., 5) BWPs. The UE may be configured to have one or more BWPs on a given component carrier. Data communication is performed through an activated BWP and only a predetermined number of BWPs (e.g., one BWP) among BWPs configured for the UE may be active on the component carrier.

For each serving cell in a set of DL BWPs or UL BWPs, the network may configure at least an initial DL BWP and one (if the serving cell is configured with uplink) or two (if supplementary uplink is used) initial UL BWPs. The network may configure additional UL and DL BWPs. For each DL BWP or UL BWP, the UE may be provided the following parameters for the serving cell: i) an SCS; ii) a CP; iii) a CRB $N^{start}_{BWP} = O_{carrier} + RB_{start}$ and the number of contiguous RBs $N^{size}_{BWP} = L_{RB}$ provided by an RRC parameter *locationAndBandwidth,* which indicates an offset $RB_{set}$ and a length $L_{RB}$ as a resource indicator value (RIV) on the assumption of $N^{start}_{BWP} = 275$, and a value $O_{carrier}$ provided by an RRC parameter *offsetToCarrier* for the SCS; an index in the set of DL BWPs or UL BWPs; a set of BWP-common parameters; and a set of BWP-dedicated parameters.

Virtual resource blocks (VRBs) may be defined within the BWP and indexed from 0 to $N^{size,u}_{BWP,i}-1$, where i denotes a BWP number. The VRBs may be mapped to PRBs according to interleaved mapping or non-interleaved mapping. In some implementations, VRB n may be mapped to PRB n for non-interleaved VRB-to-PRB mapping.

A UE for which CA is configured may be configured to use one or more cells. When the UE is configured to have multiple serving cells, the UE may be configured to have one or multiple cell groups. The UE may also be configured to have multiple cell groups associated with different BSs. Alternatively, the UE may be configured to have multiple cell groups associated with a single BS. Each cell group of the UE consists of one or more serving cells and includes a single PUCCH cell configured with PUCCH resources. The PUCCH cell may be a Pcell or an Scell configured as the PUCCH cell among Scells of a corresponding cell group. Each serving cell of the UE belongs to one of cell groups of the UE and does not belong to multiple cell groups.

NR frequency bands are defined as two types of frequency ranges, i.e., FR1 and FR2. FR2 is also referred to as millimeter wave (mmW). The following table shows frequency ranges within which NR may operate.

Table 3

| Frequency Range designation | Corresponding frequency range | Subcarrier Spacing |
| --- | --- | --- |
| FR1 | 410MHz - 7125MHz | 15, 30, 60kHz |
| FR2 | 24250MHz - 52600MHz | 60, 120, 240kHz |

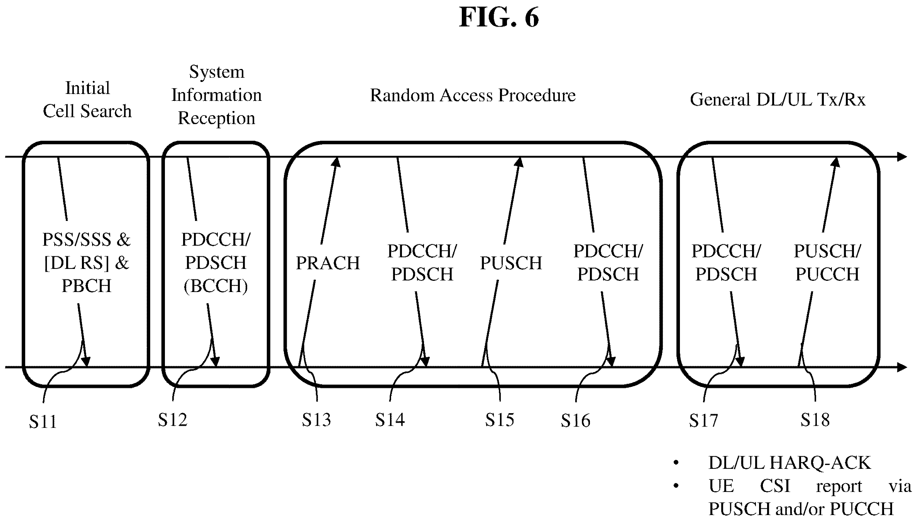

FIG. 6 is a diagram illustrating physical channels and a signal transmission/reception procedure using the physical channels in a 3GPP-based communication system as an exemplary wireless communication system.

When the UE is powered on or when the UE has been disconnected from the wireless communication system, the UE searches for a cell to camp on and performs initial cell search involving synchronization with a BS in the cell (S11). For the initial cell search, the UE receives a synchronization signal block (SSB) (also referred to as a SSB/PBCH block) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may camp on the cell. Subsequently, the UE may monitor a PDCCH in the cell and acquire more specific system information by receiving a PDSCH based on DCI carried on the PDCCH (S12).

Subsequently, to complete connection to the BS, the UE may perform a random access procedure (S13 to S16). In the random access procedure, for example, the UE may transmit a preamble on a PRACH (S13) and receive a PDCCH and a random access response (RAR) for the preamble on a PDSCH corresponding to the PDCCH (S14). When the UE fails in receiving the RAR directed to the UE, the UE may attempt to retransmit the preamble. In the case of contention-based random access, the UE may transmit a PUSCH based on a UL resource assignment included in the RAR (S15), and perform a contention resolution procedure including reception of a PDCCH and a PDSCH corresponding to the PDCCH (S16).

After the above procedure, the UE may receive a PDCCH/PDSCH from the BS (S17) and transmit a PUSCH/-PUCCH to the BS (S18) in a general UL/DL signal transmission procedure. Control information that the UE transmits to the BS is generically called uplink control information (UCI). The UCI includes a hybrid automatic repeat and request acknowledgement/negative acknowledgement (HARQ ACK/NACK), a scheduling request (SR), and channel state information (CSI). The CSI includes a channel quality indicator (CQI), a precoding matrix indicator (PMI), and/or a rank indication (RI). In general, UCI is transmitted on the PUCCH. However, when control information and data should be transmitted simultaneously, the control information may be transmitted on the PUSCH. In addition, the UE may transmit the UCI aperiodically on the PUSCH, upon receipt of a request/command from a network.

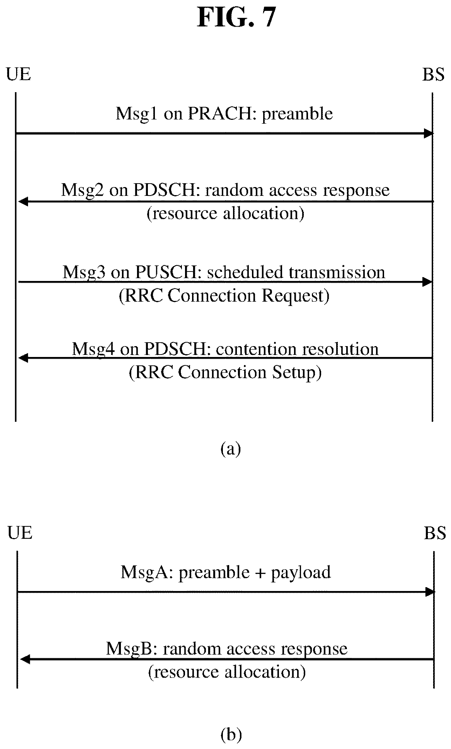

FIG. 7 illustrates random access procedures applicable to implementation(s) of the present disclosure. Particularly, FIG. 7(a) illustrates a 4-step random access procedure, and FIG. 7(b) illustrates a 2-step random access procedure.

A random access procedure may be used for various purposes including initial access, UL synchronization adjustment, resource allocation, handover, radio link reconfiguration after radio link failure, and positioning. Random access procedures are classified into a contention-based procedure and a dedicated (i.e., non-contention-based) procedure. The contention-based random access procedure generally involves initial access, whereas the dedicated random access procedure is used for UL synchronization reconfiguration in the event of handover, DL data arrival at a network, and positioning. In the contention-based random access procedure, the UE randomly selects a random access (RA) preamble. Accordingly, it is possible for a plurality of UEs to simultaneously transmit the same RA preamble, and thus a subsequent contention resolution process is required. In the dedicated random access procedure, the UE uses an RA preamble uniquely allocated to the UE by the BS. Therefore, the UE may perform the random access procedure without collision with other UEs.

Referring to FIG. 7(a), the contention-based random access procedure includes the following four steps. The messages transmitted in steps 1 to 4 may be referred to as message 1 (Msg1) to message 4 (Msg4), respectively.

- Step 1: The UE transmits an RA preamble on a PRACH.
- Step 2: The UE receives an RAR on a PDSCH from the BS.
- Step 3: The UE transmits UL data on a PUSCH to the BS. The UL data includes a Layer 2 (L2)/Layer 3 (L3) message.
- Step 4: The UE receives a contention resolution message on the PDSCH from the BS.

The UE may receive random access information in system information from the BS. For example, information regarding RACH occasions associated with SSBs on a cell may be provided in system information. The UE may select an SSB whose reference signal received power (RSRP), which is measured based on the SSB, exceeds a threshold from among SSBs received on the cell. Then, the UE may transmit an RA preamble on a PRACH associated with the selected SSB. For example, When the UE needs random access, the UE transmits Msg1 (e.g., a preamble) on a PRACH to the BS. The BS may identify each RA preamble by a time/frequency resource (hereinafter, RA occasion (RO)) carrying the RA preamble, and a random access preamble index (PI). Upon receipt of the RA preamble from the UE, the BS transmits a random access response (RAR) message to the UE on a PDSCH. To receive the RAR message, the UE monitors an L1/L2 control channel (e.g., PDCCH) with a cyclic redundancy check (CRC) masked with a random access-RNTI (RA-RNTI), including scheduling information for the RAR message, within a preconfigured time window (e.g., ra-ResponseWindow). When receiving scheduling information on the PDCCH masked with the RA-RNTI, the UE may receive an RAR message on a PDSCH indicated by the scheduling information. The UE then checks whether there is an RAR directed to the UE in the RAR message. The presence or absence of the RAR directed to the UE may be determined by checking whether there is a random access preamble ID (RAPID) for the preamble transmitted by the UE. The index of the preamble transmitted by the UE may be identical to the RAPID. The RAR includes the index of the corresponding RA preamble, timing offset information (e.g., timing advance command (TAC)) for UL synchronization, UL scheduling information (e.g., UL grant) for Msg3 transmission, and UE temporary identification information (e.g., temporary-C-RNTI (TC-RNTI)). Upon receipt of the RAR, the UE transmits Msg3 on a PUSCH according to the UL scheduling information and the timing offset value in the RAR. Msg3 may include the ID (or global ID) of the UE. Further, Msg3 may include RRC connection request-related information (e.g., RRCSetupRequest message) for initial access to the network. After receiving Msg3, the BS transmits a contention resolution message, that is, Msg4 to the UE. When the UE receives the contention resolution message and succeeds in contention resolution, the TC-RNTI is changed to a C-RNTI. Msg4 may include the ID of the UE/RRC connection-related information (e.g., an RRCSetup message). When information transmitted in Msg3 does not match information received in Msg4 or when the UE has not received Msg4 for a predetermined time, the UE may determine that the contention resolution has failed and retransmit Msg3.

The dedicated random access procedure includes the following three steps. Messages transmitted in step 0 to step 2 may be referred to as Msg0 to Msg2, respectively. The BS may trigger the dedicated random access procedure by a PDCCH serving the purpose of commanding RA preamble transmission (hereinafter, referred to as a PDCCH order).

- Step 0: The BS allocates an RA preamble to the UE by dedicated signaling.
- Step 1: The UE transmits the RA preamble on a PRACH.
- Step 2: The UE receives an RAR on a PDSCH from the BS.

Step 1 and step 2 of the dedicated random access procedure may be the same as step 1 and step 2 of the contention-based random access procedure.

The NR system may require lower latency than the legacy system. Particularly for a latency-sensitive service such as URLLC, the 4-step random access procedure may not be preferable. A low-latency random access procedure may be needed for various scenarios in the NR system. When implementation(s) of the present disclosure are realized along with a random access procedure, the implementation(s) of the present disclosure may be carried out together with the following 2-step random access procedure to reduce latency involved in the random access procedure.

Referring to FIG. 7(b), the 2-step random access procedure may be performed in two steps: transmission of MsgA from the UE to the BS and transmission of MsgB from the BS to the UE. The MsgA transmission may include transmission of an RA preamble on a PRACH and transmission of UL payload on a PUSCH. In the MsgA transmission, the PRACH and the PUSCH may be transmitted in time division multiplexing (TDM). Alternatively, the PRACH and the PUSCH may be transmitted in frequency division multiplexing (FDM) in the MsgA transmission.

Upon receipt of MsgA, the BS may transmit MsgB to the UE. MsgB may include an RAR for the UE.

An RRC connection request-related message (e.g., RRCSetupRequest message) requesting establishment of a connection between the RRC layer of the BS and the RRC layer of the UE may be included in the payload of MsgA. In this case, MsgB may be used to transmit RRC connection-related information (e.g., RRCSetup message). In contrast, the RRC connection request-related message (e.g., RRCSetupRequest message) may be transmitted on a PUSCH based on a UL grant in MsgB. In this case, RRC connection-related information (e.g., RRCSetup message) related to the RRC connection request may be transmitted on a PDSCH associated with the PUSCH transmission after the PUSCH transmission based on MsgB.

Hereinafter, physical channels that may be used in the 3GPP-based wireless communication system will be described in detail.

A PDCCH carries DCI. For example, the PDCCH (i.e., DCI) carries information about transport format and resource allocation of a downlink shared channel (DL-SCH), information about resource allocation of an uplink shared channel (UL-SCH), paging information about a paging channel (PCH), system information about the DL-SCH, information about resource allocation for a control message, such as a random access response (RAR) transmitted on a PDSCH, of a layer (hereinafter, higher layer) positioned higher than a physical layer among protocol stacks of the UE/BS, a transmit power control command, information about activation/deactivation of configured scheduling (CS), etc. DCI including resource allocation information on the DL-SCH is called PDSCH scheduling DCI, and DCI including resource allocation information on the UL-SCH is called PUSCH scheduling DCI. The DCI includes a cyclic redundancy check (CRC). The CRC is masked/scrambled with various identifiers (e.g., radio network temporary identifier (RNTI)) according to an owner or usage of the PDCCH. For example, if the PDCCH is for a specific UE, the CRS is masked with a UE identifier (e.g., cell-RNTI (C-RNTI)). If the PDCCH is for a paging message, the CRC is masked with a paging RNTI (P-RNTI). If the PDCCH is for system information (e.g., system information block (SIB)), the CRC is masked with a system information RNTI (SI-RNTI). If the PDCCH is for a random access response, the CRC is masked with a random access-RNTI (RA-RNTI).

When a PDCCH on one serving cell schedules a PDSCH or a PUSCH on another serving cell, it is referred to cross-carrier scheduling. Cross-carrier scheduling with a carrier indicator field (CIF) may allow a PDCCH on a serving cell to schedule resources on another serving cell. When a PDSCH on a serving cell schedules a PDSCH or a PUSCH on the serving cell, it is referred to as self-carrier scheduling. When the cross-carrier scheduling is used in a cell, the BS may provide information about a cell scheduling the cell to the UE. For example, the BS may inform the UE whether a serving cell is scheduled by a PDCCH on another (scheduling) cell or scheduled by the serving cell. If the serving cell is scheduled by the other (scheduling) cell, the BS may inform the UE which cell signals DL assignments and UL grants for the serving cell. In the present disclosure, a cell carrying a PDCCH is referred to as a scheduling cell, and a cell where transmission of a PUSCH or a PDSCH is scheduled by DCI included in the PDCCH, that is, a cell carrying the PUSCH or PDSCH scheduled by the PDCCH is referred to as a scheduled cell.

A PDSCH is a physical layer UL channel for UL data transport. The PDSCH carries DL data (e.g., DL-SCH transport block) and is subjected to modulation such as quadrature phase shift keying (QPSK), 16 quadrature amplitude modulation (QAM), 64 QAM, 256 QAM, etc. A codeword is generated by encoding a transport block (TB). The PDSCH may carry a maximum of two codewords. Scrambling and modulation mapping per codeword may be performed and modulation symbols generated from each codeword may be mapped to one or more layers. Each layer is mapped to a radio resource together with a DMRS and generated as an OFDM symbol signal. Then, the OFDM symbol signal is transmitted through a corresponding antenna port.

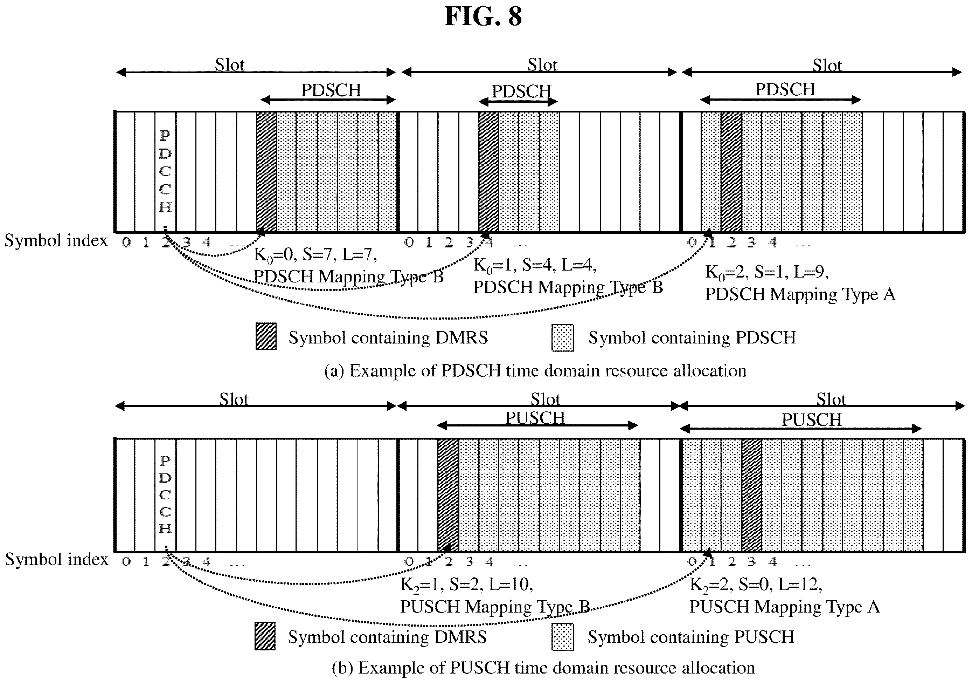

FIG. 8 illustrates an example of PDSCH TDRA caused by a PDCCH and an example of PUSCH TDRA caused by the PDCCH.

DCI carried by the PDCCH in order to schedule a PDSCH or a PUSCH includes a TDRA field. The TDRA field provides a value m for a row index m+1 to an allocation table for the PDSCH or the PUSCH. Predefined default PDSCH time domain allocation is applied as the allocation table for the PDSCH or a PDSCH TDRA table that the BS configures through RRC signaled *pdsch-TimeDomainAllocationList* is applied as the allocation table for the PDSCH. Predefined default PUSCH time domain allocation is applied as the allocation table for the PUSCH or a PUSCH TDRA table that the BS configures through RRC signaled *pusch-TimeDomainAllocationList* is applied as the allocation table for the PUSCH. The PDSCH TDRA table to be applied and/or the PUSCH TDRA table to be applied may be determined according a fixed/predefined rule (e.g., refer to 3GPP TS 38.214).

In PDSCH time domain resource configurations, each indexed row defines a DL assignment-to-PDSCH slot offset $K_0$, a start and length indicator *SLIV* (or directly, a start position (e.g., start symbol index S) and an allocation length (e.g., the number of symbols, *L*) of the PDSCH in a slot), and a PDSCH mapping type. In PUSCH time domain resource configurations, each indexed row defines a UL grant-to-PUSCH slot offset $K_2$, a start position (e.g., start symbol index S)

and an allocation length (e.g., the number of symbols, L) of the PUSCH in a slot, and a PUSCH mapping type. $K_0$ for the PDSCH and $K_2$ for the PUSCH indicate the difference between the slot with the PDCCH and the slot with the PDSCH or PUSCH corresponding to the PDCCH. *SLIV* denotes a joint indicator of the start symbol S relative to the start of the slot with the PDSCH or PUSCH and the number of consecutive symbols, *L,* counting from the symbol S. There are two PDSCH/PUSCH mapping types: one is mapping type A and the other is mapping type B. In the case of PDSCH/PUSCH mapping type A, a DMRS is mapped to a PDSCH/PUSCH resource with respect to the start of a slot. One or two of the symbols of the PDSCH/PUSCH resource may be used as DMRS symbol(s) according to other DMRS parameters. For example, in the case of PDSCH/PUSCH mapping type A, the DMRS is located in the third symbol (symbol #2) or the fourth symbol (symbol #3) in the slot according to RRC signaling. In the case of PDSCH/PUSCH mapping type B, a DMRS is mapped with respect to the first OFDM symbol of a PDSCH/PUSCH resource. One or two symbols from the first symbol of the PDSCH/PUSCH resource may be used as DMRS symbol(s) according to other DMRS parameters. For example, in the case of PDSCH/PUSCH mapping type B, the DMRS is located at the first symbol allocated for the PDSCH/PUSCH. In the present disclosure, the PDSCH/PUSCH mapping type may be referred to as a mapping type or a DMRS mapping type. For example, in this specification, PUSCH mapping type A may be referred to as mapping type A or DMRS mapping type A, and PUSCH mapping type B may be referred to as mapping type B or DMRS mapping type B.

The scheduling DCI includes an FDRA field that provides assignment information about RBs used for the PDSCH or the PUSCH. For example, the FDRA field provides information about a cell for PDSCH or PUSCH transmission to the UE, information about a BWP for PDSCH or PUSCH transmission, and/or information about RBs for PDSCH or PUSCH transmission.

A CORESET, which is a set of time-frequency resources on which the UE is capable of monitoring a PDCCH, may be defined and/or configured. The UE may be configured with one or more CORESETs. The CORESET has a time duration of one to three OFDM symbols and includes a set of PRBs. The PRBs included in the CORESET and the CORESET duration may be provided to the UE through higher layer (e.g., RRC) signaling. The UE may monitor a set of PDCCH candidates in configured CORESET(s) according to corresponding search space sets. In the present disclosure, monitoring implies decoding (blind decoding) of each PDCCH candidate based on monitored DCI formats. The MIB on a PBCH provides the UE with parameters (e.g., CORESET #0 configuration) for monitoring a PDCCH that schedules a PDSCH carrying SIB1. The PBCH may indicate that there is no associated SIB1. In this case, the UE may be provided with not only a frequency range where the UE is allowed to assume that there is no SSB associated with SSB1 but also may be provided with another frequency range where the UE is allowed to discover an SSB associated with SIB1. CORESET #0, which is a CORESET for scheduling at least SIB1, may be configured through the MIB or dedicated RRC signaling.

The set of the PDCCH candidates that the UE monitors is defined in terms of PDCCH search space sets. The search space sets may be common search space (CSS) sets or UE-specific search space (USS) sets. Each CORESET configuration is associated with one or more search space sets and each search space set is associated with one CORESET configuration.

A UE monitors a set of PDCCH candidates in one or more CORESETs on the active DL BWP on each activated serving cell configured with PDCCH monitoring according to corresponding search space sets where monitoring implies receiving each PDCCH candidate and decoding according to the monitored DCI formats.

The following table shows PDCCH search spaces.

Table 4

| Search Space | Type | RNTI | Use Case |
|---|---|---|---|
| Type0-PDCCH | Common | SI-RNTI on a primary cell | Broadcast of System Information |
| Type0A-PDCCH | Common | SI-RNTI on a primary cell | Broadcast of System Information |
| Type1-PDCCH | Common | RA-RNTI or TC-RNTI on a primary cell | Msg2, Msg4 in RACH |
| Type2-PDCCH | Common | P-RNTI on a primary cell | Paging System Information change notification |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI or CS-RNTI | Group signaling |
| UE Specific | UE Specific | C-RNTI, MCS-C-RNTI or CS-RNTI | UE signaling (e.g., PDSCH/PUSCH) |

The search space (SS) set may be configured by system information (e.g., MIB) or UE-specific higher layer (e.g., RRC) signaling. S (e.g., 10) SS sets or less may be configured in each DL BWP of a serving cell. For example, the following parameters/information may be provided for each SS set. Each SS set may be associated with one CORESET, and each CORESET configuration may be associated with one or more SS sets.

- searchSpaceId: indicates the ID of the SS set.
- controlResourceSetId: indicates the CORESET associated with the SS set.
- monitoringSlotPeriodicityAndOffset: indicates a PDCCH monitoring periodicity (in a unit of slot) and a PDCCH monitoring offset (in a unit of slot).
- monitoringSymbolsWithinSlot: indicates first OFDMA symbol(s) for PDCCH monitoring in a slot in which the PDCCH monitoring is configured. The first OFDMA symbol(s) are indicated by a bitmap, and each bit corresponds to a respective one of OFDMA symbols in the slot. The MSB of the bitmap corresponds to the first OFDM symbol in the slot. OFDMA symbol(s) corresponding to bit(s) with a value of 1 corresponds to the first symbol(s) in the CORESET in the slot.
- nrofCandidates: indicates the number of PDCCH candidates (e.g., one of 0, 1, 2, 3, 4, 5, 6, and 8) for each AL (where AL={1, 2, 4, 8, 16}).
- searchSpaceType: indicates whether the SS type is the CSS or USS.
- DCI format: indicates the DCI format of a PDCCH candidate.

The UE may monitor PDCCH candidates in one or more SS sets in a slot according to the configuration of the CORESET/SS set. An occasion (e.g., time/frequency resource) to monitor PDCCH candidates is defined as a PDCCH (monitoring) occasion. One or more PDCCH (monitoring) occasions may be configured within a slot.

In a 3GPP-based system, UL transmission power on a UL bandwidth or a carrier of a serving cell is determined based on UE-configured maximum output power for a specific time period (e.g., a PUSCH transmission occasion, a PUCCH transmission occasion, a PRACH transmission occasion, an SRS transmission occasion, or the like) of a corresponding physical channel/signal (e.g., PUSCH, PUCCH, PRACH, or SRS), open-loop power control parameters provided by higher-layer signaling (e.g., RRC signaling) from a BS (e.g., refer to Table 6 to Table 11), and a PUSCH power control adjustment state determined based on a TPC command provided through a DCI format. A PUSCH/PUCCH/SRS/PRACH transmission occasion i may be defined by a slot index $n^u_{s,f}$ within a frame of a system frame number *SFN,* the first symbol S within the slot, and the number L of consecutive symbols. The following table illustrates a method for determining a PUSCH power control adjustment state used for determining PUSCH transmission power (refer to Clause 7.1 of 3GPP TS 38.213).

Table 5

| |
|---|
| **7.1.1 UE behavior**<br><br>- For the PUSCH power control adjustment state $f_{b,f,c}(i,l)$ for active UL BWP *b* of carrier *f* of serving cell *c* in PUSCH transmission occasion *i*<br><br>  - $\delta_{PUSCH,b,f,c}(i,l)$ is a TPC command value included in a DCI format that schedules the PUSCH transmission occasion *i* on active UL BWP *b* of carrier *f* of serving cell *c* or jointly coded with other TPC commands in a DCI format 2_2 with CRC scrambled by TPC-PUSCH-RNTI, as described in clause 11.3<br><br>    - $l \in \{0,1\}$ if the UE is configured with *twoPUSCH-PC-AdjustmentStates* and *l* = 0 if the UE is not configured with **twoPUSCH-PC-AdjustmentStates** or if the PUSCH transmission is scheduled by a RAR UL grant as described in clause 8.3 ...<br><br>      - If the UE is provided two SRS resource sets in *srs-ResourceSetToAddModList* or *srs-ResourceSetToAddModListDCI-0-2* with *usage* set to 'codebook' or 'nonCodebook', is provided *SRI-PUSCH-PowerControl,* and a DCI format scheduling the PUSCH transmission does not include an SRI field<br><br>        - If the UE is provided twoPUSCH-PC-AdjustmentStates<br><br>          - the UE determines *l* = 0 for the PUSCH transmission corresponding to the first SRS resource set with usage set to 'codebook' or 'nonCodebook', and *l* = 1 for the PUSCH transmission corresponding to the second SRS resource set with usage set to 'codebook' or 'nonCodebook'<br><br>        - else<br><br>          - the UE determines *l* = 0 for the PUSCH transmission<br><br>      - If the UE is provided two SRS resource sets in *srs-ResourceSetToAddModList* or *srs-ResourceSetToAddModListDCI-0-2* with *usage* set to 'codebook' or 'nonCodebook', and is provided *twoPUSCH-PC-AdjustmentStates* |

(continued)

- If the DCI format includes two TPC command values and the PUSCH transmissions are associated with $l$ = 0 and $l$ = 1, the UE applies the first TPC command value for I = 0 and applies the second TPC command value for I = 1

- If the DCI format includes two TPC command values and the PUSCH transmissions are associated with $l$ = 0, the UE applies the first TPC command value for $l$ = 0 and ignores the second TPC command value

- If the DCI format includes two TPC command values and the PUSCH transmissions are associated with $l$ = 1, the UE applies the second TPC command value for $l$ = 1 and ignores the first TPC command value

- If the DCI format includes one TPC command value, the UE applies the TPC command value for all $l$ associated with the PUSCH transmission

- $f_{b,f,c}(i,l) = f_{b,f,c}(i - i_0, l) + \sum_{m=0}^{C(D_i)-1} \delta_{\text{PUSCH},b,f,c}(m, l)$ is the PUSCH power control adjustment state $l$ for active UL BWP $b$ of carrier $f$ of serving cell $c$ and PUSCH transmission occasion $i$ if the UE is not provided *tpc-Accumulation,* where

- The $\delta_{\text{PUSCH},b,f,c}$ values are given in Table 7.1.1-1

- $\sum_{m=0}^{C(D_i)-1} \delta_{\text{PUSCH},b,f,c}(m, l)$ is a sum of TPC command values in a set $D_i$ of TPC command values with cardinality $C(D_i)$ that the UE receives between $K_{\text{PUSCH}}(i - i_0)$ - 1 symbols before PUSCH transmission occasion i - $i_0$ and $K_{\text{PUSCH}}(i)$ symbols before PUSCH transmission occasion i on active UL BWP b of carrier $f$ of serving cell $c$ for PUSCH power control adjustment state $l$, where $i_0$ > 0 is the smallest integer for which $K_{\text{PUSCH}}(i - i_0)$ symbols before PUSCH transmission occasion i - $i_0$ is earlier than $K_{\text{PUSCH}}(i)$ symbols before PUSCH transmission occasion i

- If a PUSCH transmission is scheduled by a DCI format, $K_{\text{PUSCH}}(i)$ is a number of symbols for active UL BWP $b$ of carrier $f$ of serving cell c after a last symbol of a corresponding PDCCH reception and before a first symbol of the PUSCH transmission

For more details of PUSCH transmission power, PUCCH transmission power, PRACH transmission power, and SRS transmission power, reference may be made to 3GPP TS 38.213.

The following tables illustrate an information element (IE) *Uplink-PowerControl,* which is provided by higher-layer signaling (e.g., RRC signaling) from the BS (refer to 3GPP TS 38.331), and its corresponding field descriptions. The IE *Uplink-PowerControl* is used for the network/BS to configure a UE-specific power control parameter for a PUSCH, a PUCCH, and an SRS.

Table 6

```
-- ASN1START
-- TAG-UPLINK-POWERCONTROL-START

Uplink-powerControl-r17   ::= SEQUENCE {
    ul-powercontrolId-r17            Uplink-powerControlId-r17,
    p0AlphaSetforPUSCH-r17           P0AlphaSet-r17              OPTIONAL, -- Need R
    p0AlphaSetforPUCCH-r17           P0AlphaSet-r17              OPTIONAL, -- Need R
    p0AlphaSetforSRS-r17             P0AlphaSet-r17              OPTIONAL    -- Need R
}

P0AlphaSet-r17 ::=           SEQUENCE {
    p0-r17                           INTEGER (-16..15)           OPTIONAL, -- Need R
    alpha-r17                        Alpha                       OPTIONAL, -- Need S
    closedLoopIndex-r17              ENUMERATED { i0, i1 }
}

Uplink-powerControlId-r17 ::= INTEGER(1.. maxUL-TCI-r17)

-- TAG-UPLINK-POWERCONTROL-STOP
-- ASN1STOP
```

Table 7

| **Uplink-PowerControl field descriptions** |
|---|
| **p0AlphaSetforPUSCH, p0AlphaSetforPUCCH, p0AlphaSetforSRS** |
| Configures power control parameters for PUSCH, PUCCH and SRS (see TS 38.213 [13], clause 7.2). When the field *alpha* is absent in *p0AlphaSetforPUSCH,* the UE applies the value 1 for PUSCH power control. When the field *alpha* is absent in *p0AlphaSetforSRS,* the UE applies the value 1 for SRS power control. In *p0AlphaSetFor-PUCCH,* the field alpha is absent (not used). |

The following tables illustrate a portion of an IE *PUSCH-PowerControl,* which is provided through higher-layer signaling (e.g., RRC signaling) from the BS (refer to 3GPP TS 38.331), and its corresponding field descriptions. The IE *PUSCH-PowerControl* is used for the network/BS to configure a UE-specific power control parameter for the PUSCH.

Table 8

```
-- ASN1START
-- TAG-PUSCH-POWERCONTROL-START

PUSCH-PowerControl ::=            SEQUENCE {
        tpc-Accumulation                ENUMERATED { disabled }          OPTIONAL, -- Need S
        msg3-Alpha                      Alpha                           OPTIONAL, -- Need S
        p0-NominalWithoutGrant          INTEGER (-202..24)              OPTIONAL, -- Need M
        p0-AlphaSets                 SEQUENCE (SIZE (1..maxNrofP0-PUSCH-AlphaSets)) OF P0-PUSCH-AlphaSet
                OPTIONAL, -- Need M
        pathlossReferenceRSToAddModList    SEQUENCE (SIZE (1..maxNrofPUSCH-PathlossReferenceRSs)) OF PUSCH-
                PathlossReferenceRS         OPTIONAL, -- Need N
        pathlossReferenceRSToReleaseList   SEQUENCE (SIZE (1..maxNrofPUSCH-PathlossReferenceRSs)) OF PUSCH-
                PathlossReferenceRS-Id      OPTIONAL, -- Need N
        twoPUSCH-PC-AdjustmentStates    ENUMERATED {twoStates}          OPTIONAL, -- Need S
        deltaMCS                        ENUMERATED {enabled}            OPTIONAL, -- Need S
        sri-PUSCH-MappingToAddModList    SEQUENCE (SIZE (1..maxNrofSRI-PUSCH-Mappings)) OF SRI-PUSCH-
                PowerControl                            OPTIONAL, -- Need N
        sri-PUSCH-MappingToReleaseList   SEQUENCE (SIZE (1..maxNrofSRI-PUSCH-Mappings)) OF SRI-PUSCH-
                PowerControlId                          OPTIONAL -- Need N
}

P0-PUSCH-AlphaSet ::=            SEQUENCE {
        p0-PUSCH-AlphaSetId             P0-PUSCH-AlphaSetId,
        p0                              INTEGER (-16..15)               OPTIONAL, -- Need S
        alpha                           Alpha                          OPTIONAL -- Need S
}
                                            ...
PUSCH-PowerControl-v1610 ::=      SEQUENCE {
                                            ...
        p0-PUSCH-SetList-r16            SEQUENCE (SIZE (1..maxNrofSRI-PUSCH-Mappings)) OF P0-PUSCH-Set-r16
                OPTIONAL, -- Need R
        olpc-ParameterSet               SEQUENCE {
            olpc-ParameterSetDCI-0-1-r16   INTEGER (1..2)                  OPTIONAL, -- Need R
            olpc-ParameterSetDCI-0-2-r16   INTEGER (1..2)                  OPTIONAL -- Need R
        }                                                               OPTIONAL, -- Need M
        ...,
}
                                            ...
P0-PUSCH-Set-r16 ::=            SEQUENCE {
        p0-PUSCH-SetId-r16              P0-PUSCH-SetId-r16,
        p0-List-r16                     SEQUENCE (SIZE (1..maxNrofP0-PUSCH-Set-r16)) OF P0-PUSCH-r16
                OPTIONAL, -- Need R
        ...
}

P0-PUSCH-SetId-r16 ::=                   INTEGER (0..maxNrofSRI-PUSCH-Mappings-1)

P0-PUSCH-r16 ::=                         INTEGER (-16..15)

-- TAG-PUSCH-POWERCONTROL-STOP
-- ASN1STOP
```

Table 9

| P0-PUSCH-AlphaSet field descriptions |
|---|
| alpha |

(continued)

| **P0-PUSCH-AlphaSet** field descriptions |
|---|
| alpha value for PUSCH with grant (except msg3) (see TS 38.213 [13], clause 7.1). When the field is absent the UE applies the value 1. |
| **p0**<br>P0 value for PUSCH with grant (except msg3) in steps of 1dB (see TS 38.213 [13], clause 7.1). When the field is absent the UE applies the value 0. |

Table 10

| **P0-PUSCH-Set** field **descriptions** |
|---|
| **p0-List**<br>Configuration of {p0-PUSCH, p0-PUSCH} sets for PUSCH. If SRI is present in the DCI, then one p0-PUSCH can be configured in PO-PUSCH-Set. If SRI is not present in the DCI, and both *olpc-ParameterSetDCI-0-1* and *olpc-ParameterSetDCI-0-2* are configured to be 1 bit, then one p0-PUSCH can be configured in PO-PUSCH-Set. If SRI is not present in the DCI, and if any of *olpc-ParameterSetDCI-0-1* and *olpc-ParameterSetDCI-0-2* is configured to be 2 bits, then two p0-PUSCH values can be configured in PO-PUSCH-Set (see TS 38.213 [13] clause 7 and TS 38.212 [17] clause 7.3.1). |
| **p0-PUSCH-SetId**<br>Configure the index of a p0-PUSCH-Set (see TS 38.213 [13] clause 7 and TS 38.212 [17] clause 7.3.1). |

Table 11

| **PUSCH-PowerControl** field descriptions |
|---|
| **deltaMCS**<br>Indicates whether to apply delta MCS. When the field is absent, the UE applies Ks = 0 in delta_TFC formula for PUSCH (see TS 38.213 [13], clause 7.1). |
| **dummy**<br>This field is not used in the specification. If received it shall be ignored by the UE. |
| **msg3-Alpha**<br>Dedicated alpha value for msg3 PUSCH (see TS 38.213 [13], clause 7.1). When the field is absent the UE applies the value 1. |
| **olpc-ParameterSetDCI-0-1, olpc-ParameterSetDCI-0-2**<br>Configures the number of bits for Open-loop power control parameter set indication for DCI format 0_1/0_2 in case SRI is not configured in the DCI. 2 bits is applicable only if SRI is not present in the DCI format 0_1. The field *olpc-ParameterSetDCI-0*-1 applies to DCI format 0_1 and the field *olpc-ParameterSetDCI-0-2* applies to DCI format 0_2 (see TS 38.212 [17], clause 7.3.1 and TS 38.213 [13], clause 11). |
| **p0-AlphaSets**<br>Configuration {p0-pusch, alpha} sets for PUSCH (except msg3 and msgA PUSCH), i.e., { {p0,alpha,index1}, {p0,alpha,index2},...} (see TS 38.213 [13], clause 7.1). When no set is configured, the UE uses the P0-nominal for msg3/msgA PUSCH, P0-UE is set to 0 and alpha is set according to either msg3-Alpha or msgA-Alpha (see TS 38.213 [13], clause 7.1). |
| **p0-NominalWithoutGrant**<br>P0 value for UL grant-free/SPS based PUSCH. Value in dBm. Only even values (step size 2) allowed (see TS 38.213 [13], clause 7.1). |
| **p0-PUSCH-SetList**<br>Configure one additional *PO-PUSCH-Set* per SRI. If present, the one bit or 2 bits in the DCI is used to dynamically indicate among the P0 value from the existing *P0-PUSCH-AlphaSet* and the P0 value(s) from the *PO-PUSCH-Set* (See TS 38.212 [17], clause 7.3.1 and TS 38.213 [13], clause 17). |
| **p0-PUSCH-SetList2** |

(continued)

| PUSCH-PowerControl field descriptions |
|---|
| For indicating per-TRP OLPC set in DCI format 0_1/0_2 with the open-loop power control parameter set indication field, a second *p0-PUSCH-SetList-r16* is used. When this field is present the *p0-PUSCH-SetList-r16* corresponds to the first SRS resource set (see TS 38.213 [13]). |
| *pathlossReferenceRSToAddModList, pathlossReferenceRSToAddModListSizeExt* <br> A *set of Reference Signals (e.g. a CSI-RS config or a SS block) to be used for PUSCH path loss* estimation. The set consists of Reference Signals configured using *pathLossReferenceRSToAddModList* and *Reference* Signals configured using *pathlossReferenceRSToAddModListSizeExt.* Up to *maxNrofPUSCH-PathlossReferenceRSs* may be configured (see TS 38.213 [13], clause 7.1). |
| *pathlossReferenceRSToReleaseList, pathlossReferenceRSToReleaseListSizeExt* <br> Lists of reference signals for PUSCH path loss estimation to be released by the UE. |
| *tpc-Accumulation* <br> If enabled, UE applies TPC commands via accumulation. If not enabled, UE applies the TPC command without accumulation. If the field is absent, TPC accumulation is enabled (see TS 38.213 [13], clause 7.1). |
| *twoPUSCH-PC-AdjustmentStates* <br> Number of PUSCH power control adjustment states maintained by the UE (i.e., fc(i)). If the field is present *(n2)* the UE maintains two power control states (i.e., fc(i,0) and fc(i,1)). If the field is absent, it maintains one power control state (i.e., fc(i,0)) (see TS 38.213 [13], clause 7.1). |

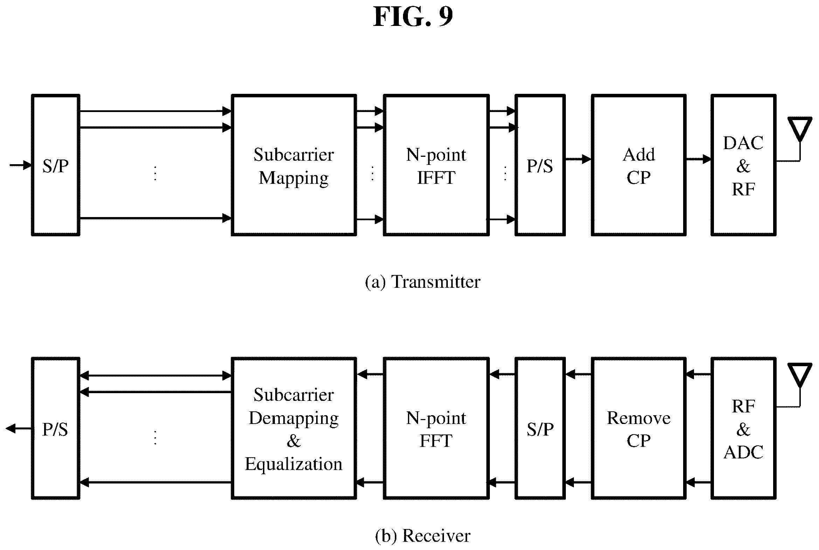

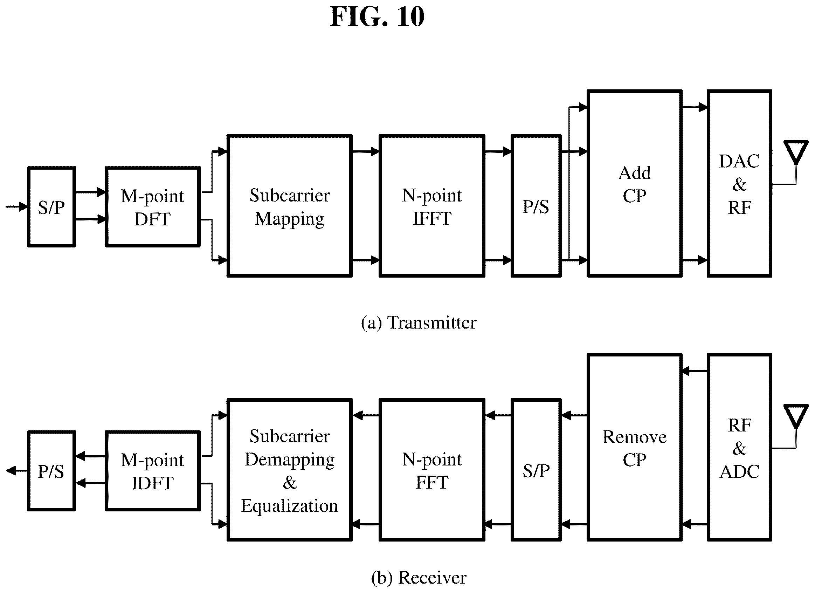

FIG. 9 illustrates a receiver block for OFDM using a cyclic prefix (CP), and FIG. 10 illustrates an example of a receiver block for discrete Fourier transform-spread-OFDM (DFT-s-OFDM). In FIGS. 9 and 10, "S/P" represents a 'serial to parallel converter', "P/S" represents a 'parallel to serial converter', and "DAC" represents a 'digital to analog converter'.

In a current NR system, a DL transmission waveform is conventional OFDM using a CP, while a UL transmission waveform is conventional OFDM using a CP with a transform precoding function that performs DFT spreading, which may be disabled or enabled by RRC signaling (e.g., SIB1 or UE-specific RRC signaling) from the BS. CP-OFDM with DFT spreading is specifically referred to as DFT-s-OFDM. DFT-s-OFDM has a lower peak-to-average power ratio (PAPR) than CP-OFDM, allowing the UE to perform a transmission with higher average power. A PAPR is the ratio of a peak power value to an average power value. In OFDM, signals divided across multiple subcarriers are transmitted, and thus the peak value increases during an inverse fast Fourier transform (IFFT) process which combines parallel frequency-domain signals on multiple subcarriers into a serial time-domain signal. Therefore, the conventional OFDM has the disadvantage of a high PAPR. A higher PAPR leads to increased power consumption, and an amplifier operates outside its linear region due to the amplification of a waveform, thereby distorting the waveform and increasing power. DFT-s-OFDM may reduce a PAPR by transmitting a signal on a single carrier rather than dividing it across multiple subcarriers. Considering these characteristics of DFT-s-OFDM and CP-OFDM, the BS may instruct the UE to use DFT-s-OFDM if it intends the UE to perform a UL transmission with wider coverage, and may instruct the UE to use CP-OFDM if such a need does not exist.

As mentioned earlier, the current NR system defines that the BS configures a waveform (CP-OFDM or DFT-S-OFDM) to be used for by RRC signaling (e.g., SIB1 or UE-specific RRC signaling). For coverage enhancement, dynamic waveform switching (DWS), which dynamically enables or disables transform precoding by DCI, is currently considered. For example, when transform precoding is enabled by a DWS indicator, DFT-s-OFDM is used for a UL transmission, and when transform precoding is disabled by the DWS indicator, CP-OFDM is used for the UL transmission. In the present disclosure, the DWS indicator is also referred to as a transform precoder indicator.

A description will be given below of some implementations of the present disclosure for a method and procedure in which when an indicator field for DWS is supported, a BS configures different open-loop power control parameter(s) for each waveform so that a UE may perform UL power control suitable for an indicated UL waveform, and the UE transmits a power headroom report based on the parameter(s).

Details defined in 3GPP TS 38.331 will be described in more detail. It was defined that for an Msg3 PUSCH in a 4-step RACH process, when an RRC parameter *msg3-transformPrecoder* is set to enable, DFT-s-OFDM is used as a UL waveform, and when the field of the RRC parameter *msg3-transformPrecoder* is absent, CP-OFDM is used as a UL waveform. Meanwhile, it was defined that for an MsgA PUSCH in a 2-step RACH process, when the RRC parameter *msgA-TransformPrecoder* is set to enable, DFT-s-OFDM is used as a UL waveform, and when it is set/indicated as disable, CP-OFDM is used. For the waveforms of other UL channels (e.g., a normal PUSCH scheduled by a DCI format, other than a configured grant-based PUSCH, and a configured grant-based PUSCH) excluding the Msg3 PUSCH and MsgA PUSCH, when an RRC parameter *transformPrecoder* for a PUSCH configuration is set/indicated as enable, DFT-s-OFDM is used, and when it is set/indicated as disable, CP-OFDM is used. Additionally, it was defined that when the parameter *transformPrecoder* is not separately provided/indicated, the setting of the parameter *msg3-transformPrecoder* is followed.

When an N-bit (e.g., N=1) explicit field for DWS is introduced, the UE may dynamically change the waveform of each scheduled PUSCH. Each waveform has different characteristics, one of which is a maximum transmission power change due to a PAPR. When using DFT-s-OFDM for a UL transmission, the UE may easily increase UL transmission power compared to CP-OFDM. Further, maximum power reduction used in transmission power calculation for scheduled time/frequency resources may differ for each waveform. Therefore, the UE may have different required transmission power as well as different maximum transmission power, for each waveform. Considering this, there may be a need for a method for controlling UL power by taking into account a waveform used by a UE.

When the UE uses different transmission power for each waveform, a power headroom report (PHR) of the UE needs to reflect it.

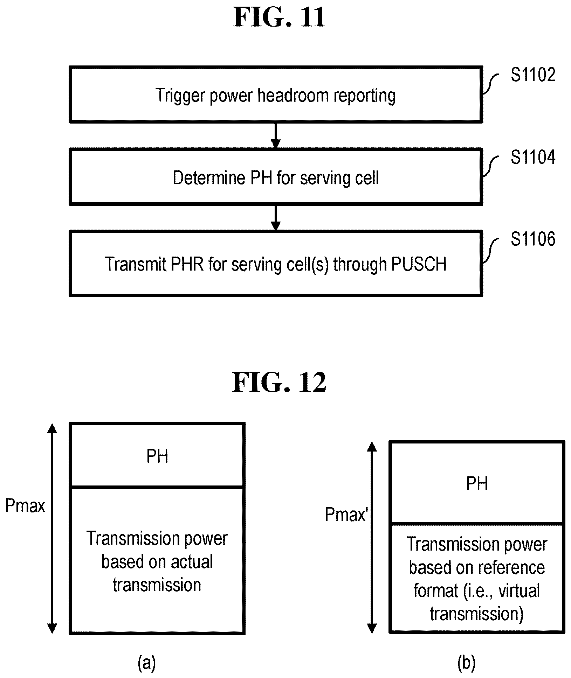

FIG. 11 illustrates a power headroom reporting process.

The power headroom reporting process may be triggered based on various events (S1102). Subsequently, the UE may determine/calculate a power headroom (PH) for each (activated) serving cell (S1104) and transmit a PHR for the (activated) serving cell(s) through a PUSCH (S1106).

In a 3GPP-based wireless communication system, the power headroom reporting process is used for a UE to provide information about its available transmission power to a serving BS. For example, the power headroom reporting process may be used for the UE to provide the following information to the serving BS:

- Type 1 power headroom: the difference between the nominal UE maximum transmission power and estimated power for UL-SCH transmission for each activated serving cell;
- Type 2 power headroom: the difference between the nominal UE maximum transmission power and estimated power for UL-SCH and PUCCH transmissions on the SpCell of another MAC entity (e.g., E-UTRA MAC entity in EN-DC, NE-DC, and NGEN-DC cases); and
- Type 3 power headroom: the difference between the nominal UE maximum transmission power and estimated power for SPR transmission for each activated serving cell.

FIG. 12 illustrates a method of determining a power headroom (PH) value. The PH for an activated (serving) cell may be determined based on an actual transmission or a reference format. For example, for PUSCH transmission occasion i in the active UL BWP b of the carrier f of the serving cell c, the UE may determine Type 1 PH as follows.

- PHtype1 = Pmax - P_pusch, when PH is based on the actual transmission (FIG. 12(a));
- PHtype1 = Pmax' - P_pusch', when PH is on the reference format (FIG. 12(b)).

Here, Pmax indicates the UE maximum transmission power value of the carrier f of the serving cell c in which PUSCH transmission is performed. When there is only one UL carrier in the serving cell c, f may be omitted. P_pusch indicates a power value based on the actual PUSCH transmission power. Power compensation values according to path loss may be reflected in P_pusch. Pmax' indicates the UE maximum transmission power for a reference format (or reference/virtual PUSCH transmission), and P_pusch' indicates the PUSCH transmission power for the reference format (or reference/virtual PUSCH transmission). See 3GPP TS 38.213 and 3GPP TS 38.331 for more information on how to determine P_pusch and P_pusch'.

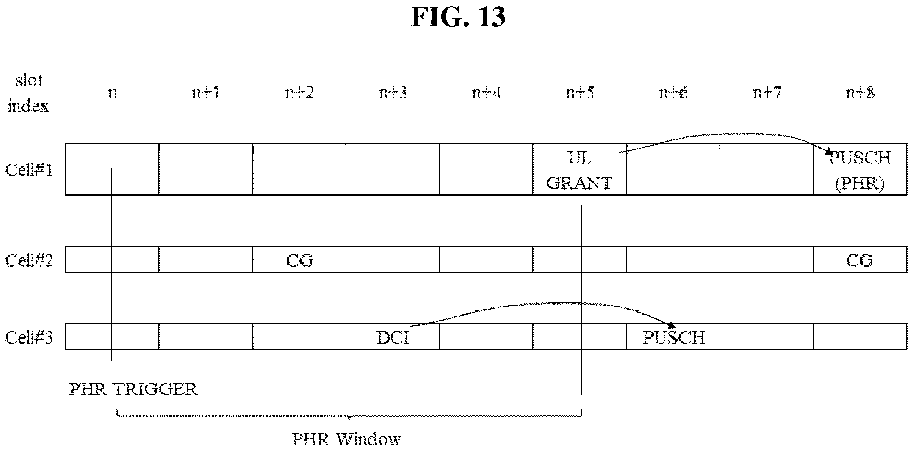

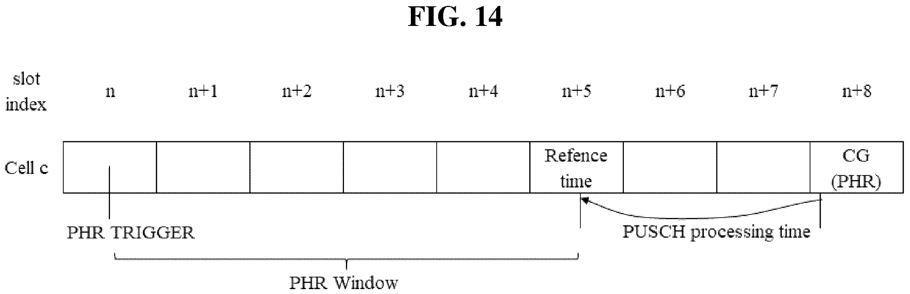

FIGS. 13 and 14 illustrate UL transmission used to calculate a PH value for a serving cell in some embodiments of the present disclosure. Hereinafter, for simplicity, a period from the time when the power headroom report is triggered to the time when the DCI triggering the PUSCH on which the PH is to be reported is received is referred to as a PHR window, and UL transmission that serves as a reference in calculating the PH value for the serving cell is referred to as reference UL transmission.

In some implementations of the present disclosure, the UE may calculate a power headroom (PH) based on a time point at which actual transmission for transmission of the PHR is scheduled since a power report headroom report was triggered to perform power headroom reporting or a processing time of the reference format. For example, referring to FIG. 13, when the PHR for an activated serving cell is reported on the PUSCH triggered by the first UL grant DCI after triggering of the PHR, the UE may determine whether the PHR is based on an actual transmission or a reference format, based on i) higher layer (RRC) signaling of configured grant (CG) and periodic/semi-persistent sounding reference signal transmissions, and ii) downlink control information received by the UE until the PDCCH monitoring occasion when the UE detects the first UL grant DCI for scheduling initial transmission of a transport block after the PHR is triggered. Referring to FIG. 14, when the PHR is reported on a PUSCH using a configured grant, the UE may determine whether the PHR is based on an actual transmission or a reference format, based on i) higher layer signaling of CG and periodic/semi-persistent sounding reference signal transmissions, and ii) downlink control information received by the UE until the first uplink symbol of a configured PUSCH transmission minus $T_{proc,2}$. In other words, the UE may calculate a PH value based on higher layer signaling and/or L1 signaling until a specific time after the PHR is triggered.

If there is an indicated/configured UL transmission in a cell at the time when a PH value for the cell is reported, the PH value may be calculated based on the indicated/configured actual UL transmission. Otherwise, the PH value may be calculated based on the reference format. For example, referring to FIG. 13, when a PH value for cell #2 and a PH value for cell #3 are included in a PHR to be transmitted on PUSCH in cell #1 in slot #n+8, the PH value for cell #2 may be calculated based on the PUSCH transmission of the configured grant in slot #n+8 because the grant configured in cell #2 is present in slot #n+8. Since there is no actual UL transmission in cell #2 in the slot #n+8, the PH value for cell #2 may be calculated based on the reference format (i.e., virtual UL transmission).

Upon occurrence of a specific event, power headroom reporting is triggered. The UE may calculate a PH value based on, for example, the following (refer to 3GPP TS 38.213).

Table 12

> ## 7.7 **Power headroom report**
> The types of UE power headroom reports are the following. A Type 1 UE power headroom *PH* that is valid for PUSCH transmission occasion *i* on active UL BWP *b* of carrier *f* of serving cell C. A Type 3 UE power headroom *PH* that is valid for SRS transmission occasion *i* on active UL BWP *b* of carrier *f* of serving cell C. A UE determines whether a power headroom report for an activated serving cell [11, TS 38.321] is based on an actual transmission or a reference format based on the higher layer signalling of configured grant and periodic/semi-persistent sounding reference signal transmissions and downlink control information the UE received until and including the PDCCH monitoring occasion where the UE detects the first DCI format 0_0 or DCI format 0_1 scheduling an initial transmission of a transport block since a power headroom report was triggered if the power headroom report is reported on a PUSCH triggered by the first DCI. Otherwise, a UE determines whether a power headroom report is based on an actual transmission or a reference format based on the higher layer signalling of configured grant and periodic/semi-persistent sounding reference signal transmissions and downlink control information the UE received until the first uplink symbol of a configured PUSCH transmission minus $T'_{proc,2}=T_{proc,2}$ where $T_{proc,2}$ is determined according to [6, TS 38.214] assuming $d_{2,1} = 1$, $d_{2,2}=0$, and with $\mu_{DL}$ corresponding to the subcarrier spacing of the active downlink BWP of the scheduling cell for a configured grant if the power headroom report is reported on the PUSCH using the configured grant. If a UE
> - is configured with two UL carriers for a serving cell, and
> - determines a Type 1 power headroom report and a Type 3 power headroom report for the serving cell the UE
> - provides the Type 1 power headroom report if both the Type 1 and Type 3 power headroom reports are based on respective actual transmissions or on respective reference transmissions
> - provides the power headroom report that is based on a respective actual transmission if either the Type 1 report or the Type 3 report is based on a respective reference transmission
>
> If a UE is configured with a SCG and if *phr-ModeOtherCG* for a CG indicates 'virtual' then, for power headroom reports transmitted on the CG, the UE computes *PH* assuming that the UE does not transmit PUSCH/PUCCH on any serving cell of the other CG. For NR-DC when both the MCG and the SCG operate either in FR1 or in FR2 and for a power headroom report transmitted on the MCG or the SCG, the UE computes *PH* assuming that the UE does not transmit PUSCH/PUCCH on any serving cell of the SCG or the MCG, respectively.
>
> If the UE is configured with a SCG,
> - For computing power headroom for cells belonging to MCG, the term 'serving cell' in this clause refers to serving cell belonging to the MCG.
> - For computing power headroom for cells belonging to SCG, the term 'serving cell' in this clause refers to serving cell belonging to the SCG. The term "primary cell' in this clause refers to the PSCell of the SCG.
>
> If the UE is configured with a PUCCH-SCell,
> - For computing power headroom for cells belonging to primary PUCCH group, the term 'serving cell' in this clause refers to serving cell belonging to the primary PUCCH group.
> - For computing power headroom for cells belonging to secondary PUCCH group, the term 'serving cell' in this clause refers to serving cell belonging to the secondary PUCCH group. The term "primary cell' in this clause refers to the PUCCH-SCell of the secondary PUCCH group.
>
> For a UE configured with EN-DC/NE-DC and capable of dynamic power sharing, if E-UTRA Dual Connectivity PHR [14, TS 36.321] is triggered and,
> - if the duration of NR slot on active UL BWP is different from that of E-UTRA subframe carrying the Dual Connectivity PHR, the UE provides power headroom of the first NR slot that fully overlaps with the E-UTRA subframe;

- if the duration of NR slot on active UL BWP is the same as that of E-UTRA subframe carrying the Dual Connectivity PHR for asynchronous EN-DC/NE-DC [10, TS 38.133], the UE provides power headroom of the first NR slot that overlaps with the E-UTRA subframe.

Table 13

**7.7.1 Type 1 PH report**

If a UE determines that a Type 1 power headroom report for an activated serving cell is based on an actual PUSCH transmission then, for PUSCH transmission occasion *i* on active UL BWP *b* of carrier *f* of serving cell *c*, the UE computes the Type 1 power headroom report as

$$PH_{\mathrm{type1}b,f,c}(i,j,q_d,l) = P_{\mathrm{CMAX},f,c}(i) - \left\{ P_{\mathrm{O\_PUSCH}b,f,c}(j) + 10\log_{10}(2^{\mu} \cdot M_{\mathrm{RB},b,f,c}^{\mathrm{PUSCH}}(i)) + \alpha_{b,f,c}(j) \cdot PL_{b,f,c}(q_d) + \Delta_{\mathrm{TF},b,f,c}(i) + f_{b,f,c}(i,l) \right\}$$

[dB]

where $P_{CMAX,f,c}(i)$, $P_{O\_PUSCH,b,f,c}(j)$, $M_{\mathrm{RB},b,f,c}^{\mathrm{PUSCH}}(i)$, $\alpha_{b,f,c}(j)$, $PL_{b,f,c}(q_d)$, $\Delta_{\mathrm{TF},b,f,c}(i)$ and $f_{b,f,c}(i,l)$ are defined in Clause 7.1.1.

Table 14

**7.7.1 Type 1 PH report**

...

If a UE is configured with multiple cells for PUSCH transmissions, where a SCS configuration $\mu_1$ on active UL BWP $b_1$ of carrier $f_1$ of serving cell $c_1$ is smaller than a SCS configuration $\mu_2$ on active UL BWP $b_2$ of carrier $f_2$ of serving cell $c_2$, and if the UE provides a Type 1 power headroom report in a PUSCH transmission in a slot on active UL BWP $b_1$ that overlaps with multiple slots on active UL BWP $b_2$, the UE provides a Type 1 power headroom report for the first PUSCH, if any, on the first slot of the multiple slots on active UL BWP $b_2$ that fully overlaps with the slot on active UL BWP $b_1$. If a UE is configured with multiple cells for PUSCH transmissions, where a same SCS configuration on active UL BWP $b_1$ of carrier $f_1$ of serving cell $c_1$ and active UL BWP $b_2$ of carrier $f_2$ of serving cell $c_2$, and if the UE provides a Type 1 power headroom report in a PUSCH transmission in a slot on active UL BWP $b_1$, the UE provides a Type 1 power headroom report for the first PUSCH, if any, on the slot on active UL BWP $b_2$ that overlaps with the slot on active UL BWP $b_1$.

For a UE configured with EN-DC/NE-DC and capable of dynamic power sharing, if E-UTRA Dual Connectivity PHR [14, TS 36.321] is triggered, the UE provides power headroom of the first PUSCH, if any, on the determined NR slot as described in clause 7.7.

If a UE is configured with multiple cells for PUSCH transmissions, the UE does not consider for computation of a Type 1 power headroom report in a first PUSCH transmission that includes an initial transmission of transport block on active UL BWP $b_1$ of carrier $f_1$ of serving cell $c_1$, a second PUSCH transmission on active UL BWP $b_2$ of carrier $f_2$ of serving cell $c_2$ that overlaps with the first PUSCH transmission if

- the second PUSCH transmission is scheduled by a DCI format 0_0 or a DCI format 0_1 in a PDCCH received in a second PDCCH monitoring occasion, and
- the second PDCCH monitoring occasion is after a first PDCCH monitoring occasion where the UE detects the earliest DCI format 0_0 or DCI format 0_1 scheduling an initial transmission of a transport block after a power headroom report was triggered

or

- the second PUSCH transmission is after the first uplink symbol of the first PUSCH transmission minus $T'_{proc,2} = T_{proc,2}$ where $T_{proc,2}$ is determined according to [6, TS 38.214] assuming $d_{2,1} = 1$, $d_{2,2} = 0$, and with $\mu_{DL}$ corresponding to the subcarrier spacing of the active downlink BWP of the scheduling cell for a configured grant if the first PUSCH transmission is on a configured grant after a power headroom report was triggered.

If the UE determines that a Type 1 power headroom report for an activated serving cell is based on a reference PUSCH transmission then, for PUSCH transmission occasion *i* on active UL BWP *b* of carrier *f* of serving cell *c*, the UE computes the Type 1 power headroom report as

$$PH_{\mathrm{type1}b,f,c}(i,j,q_d,l) = \tilde{P}_{\mathrm{CMAX},f,c}(i) - \left\{ P_{\mathrm{O\_PUSCH}b,f,c}(j) + \alpha_{b,f,c}(j) \cdot PL_{b,f,c}(q_d) + f_{b,f,c}(i,l) \right\} \quad [\mathrm{dB}]$$

(continued)

where $\tilde{P}_{CMAX,f,c}(i)$ is computed assuming MPR=0 dB, A-MPR=0 dB, P-MPR=0 dB. $\Box$Tc = 0 dB. MPR, A-MPR, P-MPR and $\Box$Tc are defined in [8-1, TS 38.101-1], [8-2, TS38.101-2] and [8-3, TS 38.101-3]. The remaining parameters are defined in Clause 7.1.1 where $P_{O\_PUSCH,b,f,c}(j)$ and $\alpha_{b,f,c}(j)$ are obtained using $P_{O\_NOMINAL\_PUSCH,f,c}(0)$ and *p0-PUSCH-AlphaSetId* = 0, $PL_{b,f,c}(q_d)$ is obtained using *pusch-PathlossReferenceRS-Id* = 0, and $l = 0$.

If a UE is configured with two UL carriers for a serving cell and the UE determines a Type 1 power headroom report for the serving cell based on a reference PUSCH transmission, the UE computes a Type 1 power headroom report for the serving cell assuming a reference PUSCH transmission on the UL carrier provided by *pusch-Config*. If the UE is provided *pusch-Config* for both UL carriers, the UE computes a Type 1 power headroom report for the serving cell assuming a reference PUSCH transmission on the UL carrier provided by *pucch-Config*. If *pucch-Config* is not provided to the UE for any of the two UL carriers, the UE computes a Type 1 power headroom report for the serving cell assuming a reference PUSCH transmission on the non-supplementary UL carrier.

Table 15

### 7.7.2 Type 2 PH report

This clause is reserved.

### 7.7.3 Type 3 PH report

If a UE determines that a Type 3 power headroom report for an activated serving cell is based on an actual SRS transmission then, for SRS transmission occasion $i$ on active UL BWP $b$ of carrier $f$ of serving cell $c$ and if the UE is not configured for PUSCH transmissions on carrier $f$ of serving cell $c$, the UE computes a Type 3 power headroom report as

$$PH_{\text{type3},b,f,c}(i,q_s) = P_{\text{CMAX},f,c}(i) - \left\{ P_{\text{O\_SRS},b,f,c}(q_s) + 10\log_{10}(2^{\mu} \cdot M_{\text{SRS},b,f,c}(i)) + \alpha_{\text{SRS},b,f,c}(q_s) \cdot PL_{b,f,c}(q_d) + h_{b,f,c}(i) \right\}$$

$$[\text{dB}]$$

where $P_{\text{CMAX},f,c}(i)$, $P_{\text{O\_SRS},b,f,c}(q_s)$, $M_{\text{SRS},b,f,c}(i)$, $\alpha_{\text{SRS},b,f,c}(q_s)$, $PL_{b,f,c}(q_d)$ and $h_{b,f,c}(i)$ are defined in Clause 7.3.1.

If the UE determines that a Type 3 power headroom report for an activated serving cell is based on a reference SRS transmission then, for SRS transmission occasion $i$ on UL BWP $b$ of carrier $f$ of serving cell $c$, and if the UE is not configured for PUSCH transmissions on UL BWP b of carrier $f$ of serving cell $c$, the UE computes a Type 3 power headroom report as $\Box$

$$PH_{\text{type3},b,f,c}(i,q_s) = \tilde{P}_{\text{CMAX},f,c}(i) - \left\{ P_{\text{O\_SRS},b,f,c}(q_s) + \alpha_{\text{SRS},b,f,c}(q_s) \cdot PL_{b,f,c}(q_d) + h_{b,f,c}(i) \right\} \quad [\text{dB}]$$

where $q_s$ is a SRS resource set corresponding to *SRS-ResourceSetId = 0* for UL BWP $b$ and $P_{\text{O\_SRS},b,f,c}(q_s)$, $\alpha_{\text{SRS},f,c}(q_s)$, $PL_{b,f,c}(q_d)$ and $h_{b,f,c}(i)$ are defined in Clause 7.3.1 with corresponding values obtained from *SRS-ResourceSetId = 0* for UL BWP $b$. $\tilde{P}_{\text{CMAX},f,c}(i)$ is computed assuming MPR=0 dB, A-MPR=0 dB, P-MPR=0 dB and $T_C$ =0 dB. MPR, A-MPR, P-MPR and $\Box T_C$ are defined in [8-1, TS 38.101-1], [8-2, TS38.101-2] and [8-3, TS 38.101-3].

If a UE is configured with two UL carriers for a serving cell and the UE determines a Type 3 power headroom report for the serving cell based on a reference SRS transmission, the UE computes a Type 3 power headroom report for the serving cell assuming a reference SRS transmission on the UL carrier provided by *pucch-Config*. If *pucch-Config* is not provided to the UE for any of the two UL carriers, the UE computes a Type 3 power headroom report for the serving cell assuming a reference SRS transmission on the non-supplementary UL carrier.

Conventionally, to perform power headroom reporting, the UE calculates a PHR value based on a scheduling time of an actual PUSCH transmission carrying a PHR or a processing time for an available reference PUSCH transmission from a time when the power headroom reporting is triggered. In other words, the UE may determine the PH value based on higher-layer signaling and/or L1 signaling (DCI) up to a specific time point. In a future system, since the waveform of each PUSCH may differ, this needs to be considered for a PHR transmission based on an actual PUSCH transmission.

As disclosed in Table 13 to Table 15, the UE may use open-loop parameter(s) provided by higher-layer signaling (e.g., RRC signaling) from the BS to calculate the PHR. Therefore, when the open-loop transmit power parameters differ for each waveform, it is necessary to determine which waveform will be considered even in a process of generating a virtual PHR based on a reference PUSCH.

For a method for, when a waveform used for a UL transmission of a UE is dynamically changed, some implementations of the present disclosure related to controlling UL transmission power and generating a PHR by considering the change will be described below.

Further, for a method and procedure for, when a UE performs a PHR transmission, determining a reference UL transmission to be used for PHR calculation by considering potentially occurring channel prioritization, some implementations of the present disclosure will be described below. For example, for a method for selecting a target UL transmission for PHR calculation based on a specific priority transmission, a method for selecting a target UL transmission for PHR calculation based on a scheduling scheme, and a method for selecting a specific UL transmission as a target for PHR calculation from among a plurality of configured UL transmissions, some implementations of the present disclosure will be described.

Although implementations of the present disclosure are described using two waveforms, DFT-s-OFDM and CP-OFDM, by way of example, the implementations of the present disclosure are also applicable to waveforms other than DFT-s-OFDM or CP-OFDM or to three or more waveforms including DFT-s-OFDM and CP-OFDM.

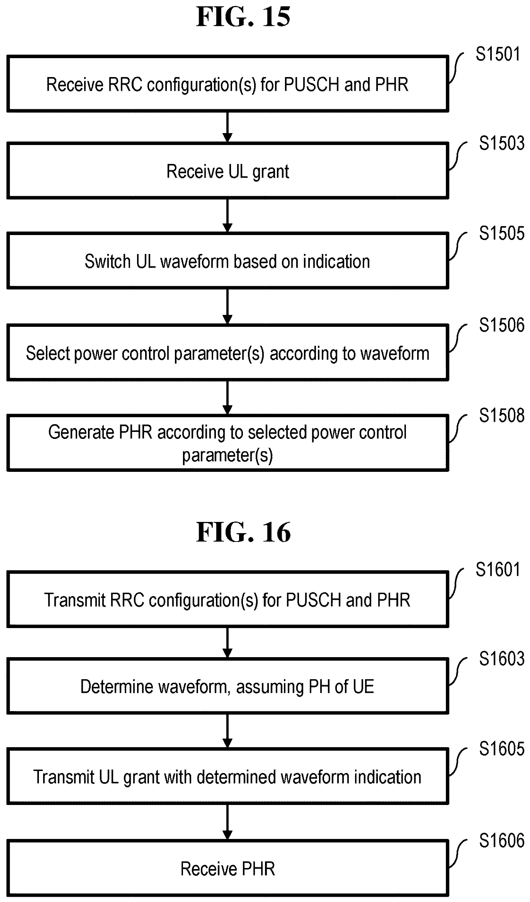

FIG. 15 illustrates an exemplary UE operation flow according to some implementations of the present disclosure.

A UE may determine a UL transmission to be used for PH calculation for a PHR and transmit the PHR including a calculated PH value. The following exemplifies a UE operation according to some implementations of the present disclosure. The implementations of the present disclosure are not limited to the following.

The UE may receive PHR-related RRC parameter(s) from a BS (S1501). For example, the UE may receive RRC parameter(s) included in an RRC configuration IE *PHR-Config*. Further, the UE may receive PUSCH transmission-related parameter(s) (e.g., an IE *PUSCH-Config*, an IE *ConfiguredGrantConfig*, and so on) from the BS, to transmit a PHR MAC control element (CE) (S1501). For example, the BS may control power headroom reporting by configuring the parameters of the following table for the UE through RRC signaling (refer to the IE *PHR-Config* in 3GPP TS 38.331).

Table 16

| |
|---|
| **.multiplePHR**<br>Indicates if power headroom shall be reported using the Single Entry PHR MAC control element or Multiple Entry PHR MAC control element defined in TS 38.321. True means to use Multiple Entry PHR MAC control element and False means to use the Single Entry PHR MAC control element. The network configures this field to *true* for MR-DC and UL CA for NR, and *to false* in all other cases. |
| **phr-ModeOtherCG**<br>Indicates the mode (i.e. real or virtual) used for the PHR of the activated cells that are part of the other Cell Group (i.e. MCG or SCG), when DC is configured. If the UE is configured with only one cell group (no DC), it ignores the field. |
| **phr-PeriodicTimer**<br>Value in number of subframes for PHR reporting. Value *sf10* corresponds to 10 subframes, value *sf20* corresponds to 20 subframes, and so on. |
| **phr-ProhibitTimer**<br>Value in number of subframes for PHR reporting. Value *sf0* corresponds to 0 subframe, value *sf10* corresponds to 10 subframes, value *sf20* corresponds to 20 subframes, and so on. |
| **phr-Tx-PowerFactorChange**<br>Value in dB for PHR reporting. Value *dB1* corresponds to 1 dB, *dB3* corresponds to 3 dB and so on. The same value applies for each serving cell (although the associated functionality is performed independently for each cell). |
| **phr-Type2OtherCell**<br>If set to true, the UE shall report a PHR type 2 for the SpCell of the other MAC entity. |

In some implementations, the operation of receiving PHR-related parameter(s) through RRC signaling from the BS by the UE may be performed by the afore-described apparatus of FIG. 2 or FIG. 3. For example, referring to FIG. 2, the at least one processor 102 may control the at least one transceiver 106 and/or the at least one memory 104 to receive the PHR-related parameter(s) through RRC signaling, and the at least one transceiver 106 may receive the PHR-related parameter(s) from the BS through the RRC signaling. In some implementations of the present disclosure, the higher-layer parameters may be transmitted during RRC connection setup in an initial access procedure.

The UE may receive a UL grant (S1503). The UL grant may include a waveform indicator. In some implementations, the waveform indicator may be a bit value indicating whether transform precoding is enabled or disabled.

The UE may select a waveform to be used for the UL transmission based on the waveform indicator (S1505). For example, the UE may select DFT-s-OFDM when transform precoding is enabled, and CP-OFDM when transform precoding is not enabled.

The UE may select one of open-loop power control (PC) parameters (or open-loop PC parameter sets) configured according to the selected waveform (S1506). In some implementations of the present disclosure, the open-loop PC parameters (sets) may be configured for the UE on a waveform basis. When the UE is configured to use an open-loop PC indication, a plurality of open-loop PC parameters may be configured for each waveform, and one of the plurality of open-loop PC parameters may be determined based on the value of the open-loop PC indication received together with the UL grant.

Power headroom reporting based on the RRC configuration(s) may be triggered in the UE, and the UE may determine reference UL transmission(s) for PHR calculation (i.e., PH calculation). In some implementations of the present disclosure, upon occurrence of a specific predefined event, power headroom reporting may be triggered. For example, upon occurrence of any one of the events illustrated in the following table, power headroom reporting may be triggered (refer to 3GPP TS 38.321).

Table 17

| |
|---|
| - *phr-ProhibitTimer* expires or has expired and the path loss has changed more than *phr-Tx-PowerFactorChange* dB for at least one activated Serving Cell of any MAC entity which is used as a pathloss reference since the last transmission of a PHR in this MAC entity when the MAC entity has UL resources for new transmission; <br> NOTE 1: The path loss variation for one cell assessed above is between the pathloss measured at present time on the current pathloss reference and the pathloss measured at the transmission time of the last transmission of PHR on the pathloss reference in use at that time, irrespective of whether the pathloss reference has changed in between. <br> - *phr-PeriodicTimer* expires; <br> - upon configuration or reconfiguration of the power headroom reporting functionality by upper layers, which is not used to disable the function; <br> - activation of an SCell of any MAC entity with configured uplink; <br> - addition of the PSCell (i.e. PSCell is newly added or changed); <br> - *phr-ProhibitTimer* expires or has expired, when the MAC entity has UL resources for new transmission, and the following is true for any of the activated Serving Cells of any MAC entity with configured uplink: <br>     - there are UL resources allocated for transmission or there is a PUCCH transmission on this cell, and the required power backoff due to power management (as allowed by P-MPR$_c$ as specified in TS 38.101-1 [14], TS 38.101-2 [15], and TS 38.101-3 [16]) for this cell has changed more than *phr-Tx-PowerFactorChange* dB since the last transmission of a PHR when the MAC entity had UL resources allocated for transmission or PUCCH transmission on this cell. <br> NOTE 2: The MAC entity should avoid triggering a PHR when the required power backoff due to power management decreases only temporarily (e.g. for up to a few tens of milliseconds) and it should avoid reflecting such temporary decrease in the values of P$_{CMAX,f,c}$/PH when a PHR is triggered by other triggering conditions. |

In some implementations, the operation of triggering power headroom reporting in the UE may be performed by the afore-described apparatus of FIG. 2 or FIG. 3. For example, referring to FIG. 2, the at least one processor 102 may trigger power headroom reporting, when the IE *PHR-Config* has been provided to the UE, or according to the start/expiration of a timer having a duration determined by a parameter *phr-PeriodicTimer* and/or a timer *phr-ProhibitTimer,* or when a path loss changes by a value equal to or larger than a value set in *phr-Tx-PowerFactorChange.*

The UE may determine/generate a PHR based on a reference UL transmission and selected PC parameter(s) (S1508).

When the UE determines the reference UL transmission, a channel priority configured for each UL transmission may be considered. In some implementations, the operation of determining a reference UL transmission by the UE may be performed by the afore-described apparatus of FIG. 2 or FIG. 3. For example, referring to FIG. 2, the at least one processor 102 may consider the priority of a configured grant received by the UE, the priority of a PUSCH transmission scheduled by DCI format 0_0/0_110_2, the priority of an SRS transmission indicated by DCI format 0_0/0_110_2 (if any), and the priority of a configured semi-persistent/periodic SRS (if any). For example, the following may be considered.

> The UE may calculate a PHR based on an indicated/configured higher-priority UL transmission. In other words, the UE may calculate the PHR, assuming that there is no indicated/configured lower-priority UL transmission. When a plurality of higher-priority PUSCH transmissions overlap (in time), the UE may select the reference UL transmission in the order of a PUSCH with a dynamic grant first, then a PUSCH with a lowest index configured grant.

> The UE may calculate a PHR based on an indicated/configured lower-priority UL transmission. In other words, the UE may calculate the PHR, assuming that there is no indicated/configured higher-priority UL transmission.

> The UE may calculate a PHR based on a scheduling time of a PUSCH carrying the PHR (i.e., a time when the UE receives the UL grant). For example, the UE calculates the PHR, assuming that there is no channel prioritization after the scheduling time of the PUSCH. This may be limited to cases where the PUSCH carrying the PHR is a PUSCH indicated by a dynamic grant and/or where the PUSCH carrying the PHR is a higher-priority PUSCH.

The UE may transmit the determined/generated PHR in PUSCH resources. For example, the UE may transmit a PHR MAC CE including the determined/generated PHR in the PUSCH resources.

FIG. 16 illustrates an exemplary BS operation flow according to some implementations of the present disclosure.

A BS may provide a PHR-related RRC configuration and a PUSCH-related configuration to a UE (S1601). The BS may determine a waveform to be applied to a UL transmission (e.g., PUSCH transmission) which will be scheduled for the UE, considering a UL PH of the UE (S1603). For example, the BS may determine a waveform that does not saturate the transmission power as the waveform to be applied to the UL transmission scheduled for the UE, considering the UL PH of the UE. The BS may transmit a UL grant with an indicator for the determined waveform to the UE (S1605). The BS may receive a PHR from the UE through a PUSCH based on the UL grant (S1606). The BS may receive the PHR, assuming a UL transmission to be used for PHR calculation in the UE. The BS may update the UL PH of the UE based on the received PHR.

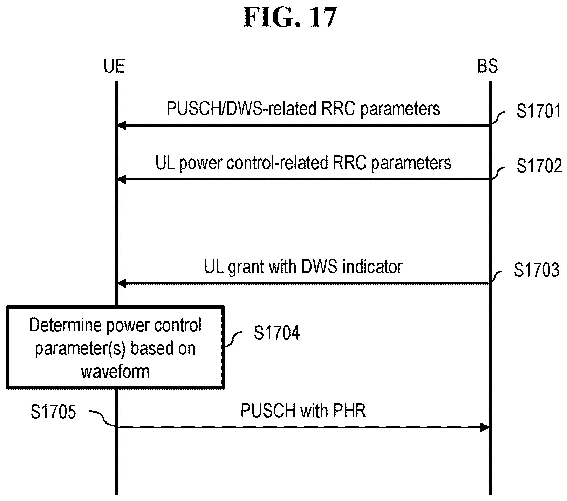

FIG. 17 illustrates an exemplary signal transmission/reception flow between a UE and a BS according to some implementations of the present disclosure.

Referring to FIG. 17, the UE may receive RRC configuration(s) related to a PUSCH and DWS from the BS (S1701). The UE may be configured with different open-loop transmission power parameter(s) for each waveform by the BS (S1702). When the UE receives a PUSCH scheduling that includes information indicating a waveform (S1703), the UE may select open-loop transmission power parameter(s) to be used for a PUSCH transmission according to the indicated waveform (S1704). When power headroom reporting is triggered in the UE, the UE may determine a UL transmission to be used for PHR calculation according to some implementations of the present disclosure. A PHR derived through the determined UL transmission may be transmitted to the BS in the form of a MAC CE through the PUSCH transmission (S1705). Upon receipt of the PHR MAC CE, the BS may perform transmission power control for the UE, assuming the reference UL transmission of the UE according to some implementations of the present disclosure.

In some implementations of the present disclosure, the following may be additionally considered for a UE operation and a BS operation.

<Implementation 1> Separated power control loop for each waveform

The BS may configure different open-loop transmission power parameter(s) (e.g., P0-PUSCH-alphaSet) for each waveform (e.g., DFT-s-OFDM and CP-OFDM) for the UE. The UE may perform a UL transmission by applying the open-loop transmission power parameter(s) for each waveform. For this purpose, the following may be considered.

> A (different) open-loop transmission power parameter (e.g., P0-PUSCH-alphaSet) may be configured for each waveform.

> Alternatively, {p0, alpha) used for a basic waveform (e.g., a waveform used for a PUSCH transmission scheduled by DCI format 0_0 or a waveform to be used when the DWS indicator is set to '0') may be configured as open-loop transmission power parameter(s) as is done conventionally, and a separate p0 offset (p0_offset) and alpha offset (alpha_offset) or a separate alpha value (alpha alt) may be configured for a waveform (hereinafter, alternative waveform) different from the basic waveform. In this case, an open-loop transmission power parameter for the alternative waveform may be determined as follows:

>> For the basic waveform, {p0, alpha} may be used for transmission power control as conventionally, and for the alternative waveform, {p0 + p0_offset, alpha + alpha offset} may be used for P0 power control; or

>> For the basic waveform, {p0, alpha} may be used for transmission power control as conventionally, and for the alternative waveform, {p0, alpha alt} may be used for P0 power control.

> When a specific waveform is indicated by a DWS indicator included in DCI, it may be assumed that each open-loop transmission power parameter associated with the waveform is applied to the corresponding UL transmission.
> When the UE is capable of performing a dynamic open-loop transmission power parameter change through an open-loop power control parameter indication, or when this change may be configured for each waveform, the UE may be configured with a plurality of open-loop transmission power parameters required for an open-loop transmission power parameter change per waveform.

In some implementations of the present disclosure, a power offset change may be performed for each waveform trough a TPC command of the BS. In other words, the UE may have a separate power control loop for each waveform. The BS may transmit a TPC command for a waveform currently used by the UE, or transmit a TPC command while indicating a waveform or power control loop index. The TPC command may be transmitted through a DCI format (e.g., DCI format 0_0/0_110_2) that schedules a PUSCH, or through a DCI format used for transmitting a TPC command for a PUCCH/-PUSCH (e.g., DCI format 2_2).

> For example, different TPC indexes may be used for different power control loops for different waveforms. A TPC index, which is an index that determines the position of the first bit of a corresponding TPC command within a DCI format, is mapped to one of a plurality of blocks, each being a TPC command, within the DCI format. The TPC index may be configured by higher-layer signaling (e.g., RRC signaling) from the BS. Different TPC indexes may be configured for different waveforms. That is, a TPC command may be provided separately for each power control loop. This may be a similar method to a case where the UE indicates its capability to support two PUSCH power control adjustment states by *twoDifferentTPC-Loop-PUSCH* (refer to 3GPP TS 38.213 Rel-17).
> Or, in another example, not only a TPC command value but also a waveform to which the TPC command is applied may be indicated by a TPC (e.g., DCI including the TPC command) transmitted by the BS.

In some implementations of the present disclosure, the UE may report a maximum transmission power difference between two waveforms or a transmission power difference required for the same performance to the BS as a UE capability, so that the BS may configure an appropriate open-loop transmission power control parameter for each waveform before receiving a PHR.

<Implementation 2> Power headroom report considering DWS

When different open-loop transmission power control parameters are used depending on waveforms, a difference in PHR calculation may occur for each waveform. Further, it is necessary to consider a waveform in PHR calculation to allow the BS to select an appropriate waveform based on a current channel state of the UE. For this purpose, at least one of the following operations may be considered.

> When generating actual PHR information,

>> The UE may generate PHR information based on scheduling of each PUSCH. The UE may generate PHR information based on the waveform of each scheduled PUSCH. Alternatively, for scheduling in the BS, the UE may generate a PHR for each waveform, assuming a case where radio resources to be scheduled by the BS are transmitted in different waveforms.

>>> In this case, since an actual radio resource allocation is given, the UE may generate a virtual PHR based on actual radio resources, not a conventional virtual PHR.

> When the UE transmits a virtual PHR based on a reference PUSCH because there is no scheduled PUSCH transmission in a corresponding cell,

>> The UE may generate a PHR for each waveform, assuming a case where the BS transmits a reference PUSCH in different waveforms. This may help the BS to determine a waveform during future scheduling for a cell on which there is no PUSCH transmission.

>> Alternatively, when transmitting a PHR, the UE may arbitrarily select a waveform to be used for calculating a virtual PHR. An indicator indicating the waveform selected by the UE may be included with the PHR in a MAC CE and delivered to the BS.

>> Alternatively, when transmitting a PHR, a waveform to be used for calculating a virtual PHR may be preconfigured by higher-layer signaling (e.g., RRC signaling) from the BS, or a predefined waveform (e.g., DFT-s-OFDM) may always be used.

>> Alternatively, the UE may generate a virtual PHR by selecting a waveform, out of the two waveforms, in which a more PH will be reported. For example, the UE may generate a virtual PHR using a waveform with a smaller power offset among the two power offsets, where a power offset is obtained based on p0 and alpha values and added to a parameter p0-nominal, whereby the power offset is used in determination of a final power.

Further, when power headroom reporting is triggered, the UE may perform waveform switching, or conversely, at a time of waveform switching, attempt a PHR transmission to allow the BS to identify whether a corresponding waveform switching indication is appropriate.

> For example, when a zero power headroom, that is, transmission power saturation is reported for a specific waveform, the UE may arbitrarily use another waveform (with a more PH) after the transmission. This may be limited to a PUSCH scheduled by a DCI format without a separate waveform indicator, or to a configured grant PUSCH (i.e., a PUSCH based on a CG configuration) for which radio resource scheduling may not be changed dynamically.
> In another example, when a PH equal to or less than a specific value P, that is, almost saturation of transmission power is reported for a specific waveform, the UE may arbitrarily use another waveform (with a larger power headroom) after the transmission. Herein, P may be a value indicated or configured by L1 signaling (e.g., DCI) or higher-layer signaling (e.g., RRC signaling) from the BS, or may be a predefined value.
> In another example, when the BS indicates a waveform different from a previously used waveform to the UE, a PHR transmission may be triggered in the UE.

>> In some implementations, this may be limited to a case where a waveform is changed for a single HARQ process.
>> In some implementations, in order to prevent continuous PHR triggers, when a PHR is triggered, the UE may start a separate timer. Before the timer expires, a PHR may not be triggered for the same reason.
>> In some implementations, this may be limited to a specific direction. For example, it may be limited to switching from DFT-s-OFDM to CP-OFDM. When CP-OFDM is switched to DFT-s-OFDM, a larger PH may be expected to be reported because DFT-s-OFDM is expected to generally have a larger PH. However, when DFT-s-OFDM is switched to CP-OFDM, it is difficult for the BS to accurately know whether the corresponding transmission will be saturated or not. Considering this, it may be regulated that a PHR transmission is triggered only when DFT-s-OFDM is switched to CP-OFDM.

According to some implementations of the present disclosure, it may be expected that the UE receives a waveform indicator from the BS and immediately selects appropriate UL transmission power to perform a PUSCH transmission. According to some implementations, signaling overhead may be reduced by minimizing unnecessary TPC command transmissions from the BS. According to some implementations of the present disclosure, malfunctions that may occur between the UE and the BS while the BS generates and transmits DCI may be prevented. According to some implementations of the present disclosure, the UE may perform power control (independently or separately) for each of a plurality of waveforms. According to some implementations of the present disclosure, it may be expected that the BS and the UE assume the same open-loop transmission power parameter, when performing PHR generation and interpretation. According to some implementations of the present disclosure, the BS may predict the PH of the UE more accurately from the PHR. According to some implementations of the present disclosure, the UE may calculate a PHR by always considering both waveforms or always considering only a specific waveform regardless of the waveform indicator, thereby reducing the complexity of UE implementation.

The implementations/methods described in the present disclosure may be applied separately or a plurality of embodiments/methods may be applied in combination. For example, Implementation 1 and Implementation 2 may be applied separately or together.

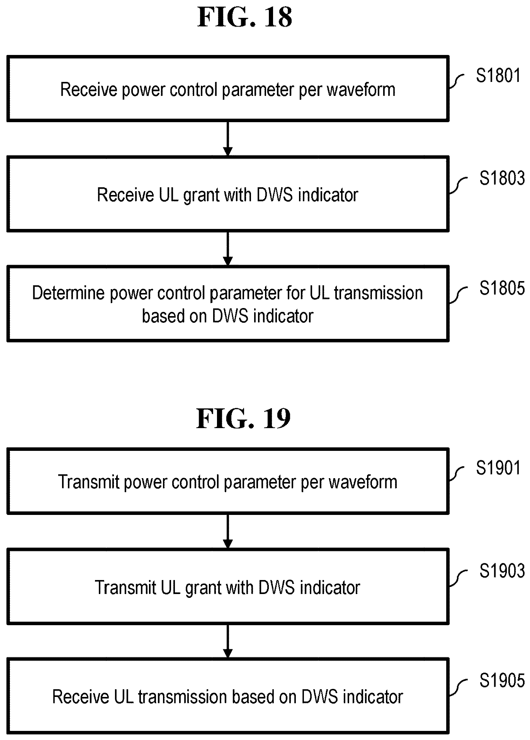

FIG. 18 illustrates an exemplary UL signal transmission flow in a UE, to which some implementations of the present disclosure are applicable.

The UE may perform operations according to some implementations of the present disclosure in association with UL signal transmissions. The UE may include at least one transceiver; at least one processor; and at least one computer memory operably connectable to the at least one processor and storing instructions that, when executed, cause the at least one processor to perform operations according to some implementations of the present disclosure. A processing device for a UE may include at least one processor; and at least one computer memory operably connectable to the at least one processor and storing instructions that, when executed, cause the at least one processor to perform operations according to some implementations of the present disclosure. A computer readable (non-transitory) storage medium may store at least one computer program including instructions that, when executed by at least one processor, cause the at least one processor to perform operations according to some implementations of the present disclosure. A computer program or a computer program product may include instructions recorded in at least one computer readable (non-transitory) storage medium and causing, when executed, (at least one processor) to perform operations according to some implementations of the present disclosure.

Referring to FIG. 18, the method of the UE, or the operations in the UE, the processing device, the computer-readable (non-transitory) storage medium, and/or the computer program product may include receiving a power control parameter for each waveform (S1801), receiving a UL grant (e.g., a DCI format that schedules a PUSCH) with a DWS indicator (i.e., a transform precoder indicator) (S1803), and determining a waveform and a power control parameter for a UL transmission based on the DWS indicator (S1805). The method or operations may further include performing the UL transmission based on the UL grant with transmission power determined by the determined waveform and power control parameter.

For example, the method or operations may include receiving a first power control parameter value for a first-type waveform and a second power control parameter value for a second-type waveform, detecting a DCI format that schedules a PUSCH, determining a waveform for the PUSCH and transmission power for the PUSCH based on the first DCI format, and transmitting the PUSCH with the transmission power. Based on a transform precoder indicator value within the first DCI format being a first value, the transmission power for the PUSCH may be determined based on the first power control parameter value, and based on the transform precoder indicator value within the first DCI format being a second value, the transmission power for the PUSCH may be determined based on the second power control parameter value.

In some implementations, the method or operations may further include applying transform precoding to the PUSCH, based on the transform precoder indicator value within the first DCI format being the first value.

In some implementations, in the method or operations, transform precoding may not be applied to the PUSCH, based on the transform precoder indicator value within the first DCI format being the second value.

In some implementations, the first-type waveform may be DFT-s-OFDM, and the second type waveform may be CP-OFDM.

In some implementations, the method or operations may further include detecting a second DCI format including PUSCH-related TPC commands, The PUSCH-related TPC commands may include a first TPC command for the first-type waveform and a second TPC command for the second-type waveform. Based on the transform precoder indicator value within the first DCI format being the first value, the transmission power for the PUSCH may be adjusted using the first TPC command. Based on the transform precoder indicator value within the first DCI format being the second value, the transmission power for the PUSCH may be adjusted using the second TPC command.

In some implementations, the method or operations may further include determining a power headroom report. The power headroom report may be transmitted through the PUSCH. The power headroom report may be determined according to, for example, Implementation 1.

FIG. 19 illustrates a UL signal reception flow in a BS, to which some implementations of the present disclosure are applicable.

The BS may perform operations according to some implementations of the present disclosure in association with UL signal receptions. The BS may include at least one transceiver; at least one processor; and at least one computer memory operably connectable to the at least one processor and storing instructions that, when executed, cause the at least one processor to perform operations according to some implementations of the present disclosure. A processing device for a BS may include at least one processor; and at least one computer memory operably connectable to the at least one processor and storing instructions that, when executed, cause the at least one processor to perform operations according to some implementations of the present disclosure. A computer readable (non-transitory) storage medium may store at least one computer program including instructions that, when executed by at least one processor, cause the at least one processor to perform operations according to some implementations of the present disclosure. A computer program or a computer program product may include instructions recorded in at least one computer readable (non-transitory) storage medium and causing, when executed, (at least one processor) to perform operations according to some implementations of the present disclosure.

Referring to FIG. 19, the method of the BS, or the operations in the BS, the processing device, the computer-readable (non-transitory) storage medium, and/or the computer program product may include transmitting a power control parameter for each waveform (S1901), transmitting a UL grant (e.g., a DCI format scheduling a PUSCH) with a DWS indicator (i.e., a transform precoder indicator) (S1903), and receiving a UL transmission based on the DWS indicator (S1905). In the method or operations, the UL transmission may be received, assuming that a UE performs the UL transmission based on the UL grant with transmission power determined by a determined waveform and the power control parameter.

For example, the method or operations may include transmitting a first power control parameter value for a first-type waveform and a second power control parameter value for a second-type waveform, transmitting a DCI format that schedules a PUSCH, and receiving the PUSCH based on the first DCI format. Based on a transform precoder indicator value within the first DCI format being a first value, the PUSCH may be received in the first-type waveform. Based on the transform precoder indicator value within the first DCI format being a second value, the PUSCH may be received in the second-type waveform.

In some implementations, the method or operations may include, based on the transform precoder indicator value within the first DCI format being the first value, receiving the PUSCH, assuming that the PUSCH is transmitted with transmission power determined based on the first power control parameter value. The method or operations may include, based on the transform precoder indicator value within the first DCI format being the second value, receiving the PUSCH, assuming that the PUSCH is transmitted with transmission power determined based on the second power control parameter value.

In some implementations, the method or operations may include, based on the transform precoder indicator value within the first DCI format being the first value, receiving the PUSCH, assuming that transform precoding is applied to the PUSCH.

In some implementations, the method or operations may include, based on the transform precoder indicator value within the first DCI format being the second value, receiving the PUSCH, assuming that transform precoding is not applied to the PUSCH.

In some implementations, the first-type waveform may be DFT-s-OFDM, and the second-type waveform may be CP-OFDM.

In some implementations, the method or operations may further include transmitting a second DCI format including PUSCH-related TPC commands. The PUSCH-related TPC commands may include a first TPC command for the first-type waveform and a second TPC command for the second-type waveform.

In some implementations, the method or operations may further include receiving a power headroom report through the PUSCH.

In some implementations, in the method or operations, a waveform for a new UL transmission may be determined based on the power headroom report.

The examples of the present disclosure as described above have been presented to enable any person of ordinary skill in the art to implement and practice the present disclosure. Although the present disclosure has been described with reference to the examples, those skilled in the art may make various modifications and variations in the example of the present disclosure. Thus, the present disclosure is not intended to be limited to the examples set for the herein, but is to be accorded the broadest scope consistent with the principles and features disclosed herein.

The implementations of the present disclosure may be used in a BS, a UE, or other equipment in a wireless communication system.

**Claims**

1. A method of transmitting an uplink signal by a user equipment (UE) in a wireless communication system, the method comprising:

   receiving a first power control parameter value for a first-type waveform and a second power control parameter value for a second-type waveform;
   detecting a downlink control information (DCI) format that schedules a physical uplink shared channel (PUSCH);
   determining a waveform for the PUSCH and transmission power for the PUSCH based on the first DCI format; and
   transmitting the PUSCH with the transmission power,
   wherein, based on a transform precoder indicator value within the first DCI format being a first value, the transmission power for the PUSCH is determined based on the first power control parameter value, and
   wherein, based on the transform precoder indicator value within the first DCI format being a second value, the transmission power for the PUSCH is determined based on the second power control parameter value.

2. The method of claim 1, further comprising applying transform precoding to the PUSCH, based on the transform precoder indicator value within the first DCI format being the first value.

3. The method of claim 1, wherein transform precoding is not applied to the PUSCH, based on the transform precoder indicator value within the first DCI format being the second value.

4. The method of claim 1, wherein the first-type waveform is discrete Fourier transform-spread-orthogonal frequency division multiplexing (DFT-s-OFDM), and the second type waveform is cyclic prefix-orthogonal frequency division multiplexing (CP-OFDM).

5. The method of claim 1, further comprising detecting a second DCI format including PUSCH-related transmit power control (TPC) commands,

wherein the PUSCH-related TPC commands include a first TPC command for the first-type waveform and a second TPC command for the second-type waveform,
wherein, based on the transform precoder indicator value within the first DCI format being the first value, the transmission power for the PUSCH is adjusted using the first TPC command, and
wherein, based on the transform precoder indicator value within the first DCI format being the second value, the transmission power for the PUSCH is adjusted using the second TPC command.

6. The method of claim 1, further comprising determining a power headroom report,
wherein the power headroom report is transmitted through the PUSCH.

7. A user equipment (UE) for transmitting an uplink signal in a wireless communication system, the UE comprising:

at least one transceiver;
at least one processor; and
at least one computer memory operably connectable to the at least one processor and storing instructions which, when executed, cause the at least one processor to perform operations comprising:

receiving a first power control parameter value for a first-type waveform and a second power control parameter value for a second-type waveform;
detecting a downlink control information (DCI) format that schedules a physical uplink shared channel (PUSCH);
determining a waveform for the PUSCH and transmission power for the PUSCH based on the first DCI format; and
transmitting the PUSCH with the transmission power,
wherein, based on a transform precoder indicator value within the first DCI format being a first value, the transmission power for the PUSCH is determined based on the first power control parameter value, and
wherein, based on the transform precoder indicator value within the first DCI format being a second value, the transmission power for the PUSCH is determined based on the second power control parameter value.

8. A processing device in a wireless communication system, comprising:

at least one processor; and
at least one computer memory operably connectable to the at least one processor and storing instructions which, when executed, cause the at least one processor to perform operations comprising:

receiving a first power control parameter value for a first-type waveform and a second power control parameter value for a second-type waveform;
detecting a downlink control information (DCI) format that schedules a physical uplink shared channel (PUSCH);
determining a waveform for the PUSCH and transmission power for the PUSCH based on the first DCI format; and
transmitting the PUSCH with the transmission power,
wherein, based on a transform precoder indicator value within the first DCI format being a first value, the transmission power for the PUSCH is determined based on the first power control parameter value, and
wherein, based on the transform precoder indicator value within the first DCI format being a second value, the transmission power for the PUSCH is determined based on the second power control parameter value.

9. A computer-readable storage medium storing at least one program code including instructions which, when executed, cause at least one processor to perform operations comprising:

receiving a first power control parameter value for a first-type waveform and a second power control parameter value for a second-type waveform;

detecting a downlink control information (DCI) format that schedules a physical uplink shared channel (PUSCH);
determining a waveform for the PUSCH and transmission power for the PUSCH based on the first DCI format; and
transmitting the PUSCH with the transmission power,
wherein, based on a transform precoder indicator value within the first DCI format being a first value, the transmission power for the PUSCH is determined based on the first power control parameter value, and
wherein, based on the transform precoder indicator value within the first DCI format being a second value, the transmission power for the PUSCH is determined based on the second power control parameter value.

10. A method for receiving an uplink signal from a user equipment (UE) by a base station (BS) in a wireless communication system, the method comprising:

transmitting a first power control parameter value for a first-type waveform and a second power control parameter value for a second-type waveform;
transmitting a downlink control information (DCI) format that schedules a physical uplink shared channel (PUSCH); and
receiving the PUSCH based on the first DCI format,
wherein, based on a transform precoder indicator value within the first DCI format being a first value, the PUSCH is received in the first-type waveform, and
wherein, based on the transform precoder indicator value within the first DCI format being a second value, the PUSCH is received in the second-type waveform.

11. A base station (BS) for receiving an uplink signal from a user equipment (UE) in a wireless communication system, the BS comprising:

at least one transceiver;
at least one processor; and
at least one computer memory operably connectable to the at least one processor and storing instructions which, when executed, cause the at least one processor to perform operations comprising:

transmitting a first power control parameter value for a first-type waveform and a second power control parameter value for a second-type waveform;
transmitting a downlink control information (DCI) format that schedules a physical uplink shared channel (PUSCH); and
receiving the PUSCH based on the first DCI format,
wherein, based on a transform precoder indicator value within the first DCI format being a first value, the PUSCH is received in the first-type waveform, and
wherein, based on the transform precoder indicator value within the first DCI format being a second value, the PUSCH is received in the second-type waveform.

12. The BS of claim 11, wherein the operations comprise:

based on the transform precoder indicator value within the first DCI format being the first value, assuming that the PUSCH is transmitted with transmission power determined based on the first power control parameter value; and
based on the transform precoder indicator value within the first DCI format being the second value, assuming that the PUSCH is transmitted with transmission power determined based on the second power control parameter value.

13. The BS of claim 11, wherein the operations further comprise assuming that transform precoding is applied to the PUSCH, based on the transform precoder indicator value within the first DCI format being the first value.

14. The BS of claim 11, wherein the operations further comprise assuming that transform precoding is not applied to the PUSCH, based on the transform precoder indicator value within the first DCI format being the second value.

15. The BS of claim 11, wherein the first-type waveform is discrete Fourier transform-spread-orthogonal frequency division multiplexing (DFT-s-OFDM), and the second-type waveform is cyclic prefix-orthogonal frequency division multiplexing (CP-OFDM).

16. The BS of claim 11, wherein the operations further comprise transmitting a second DCI format including PUSCH-related transmit power control (TPC) commands, and
wherein the PUSCH-related TPC commands include a first TPC command for the first-type waveform and a second TPC command for the second-type waveform.

17. The BS of claim 11, wherein the operations further comprise receiving a power headroom report through the PUSCH.

# FIG. 1

1

# FIG. 2

# FIG. 3

# FIG. 4

| ... | 1 frame (10 ms) | ... |

| ... | Half-frame (5ms) | Half-frame(5ms) | ... |

| ... | Subframe 0 (1ms) | ... | Subframe 4 (1ms) | Subframe 5 (1ms) | ... | Subframe 9 (1ms) | ... |

Subframe ($T_{sf}$ = 1ms)

**15kHz**
| Slot (14 symbols) |

1ms

**30kHz**
| Slot 0 (14 symbols) | Slot 1 |

500us

**60kHz**
| Slot 0 (14 심볼) | Slot 1 | Slot 2 | Slot 3 |

250us

**120kHz**
| Slot 0 (14 symbols) | Slot 1 | Slot 2 | Slot 3 | Slot 4 | Slot 5 | Slot 6 | Slot 7 |

125us

# FIG. 5

Resource grid

A carrier
(up to 3300 subcarriers, i. e., 275 RBs)

A BWP

1 RB = 12 subcarriers

1 RE

1 subcarrier

1 symbol

# FIG. 6

Initial Cell Search — PSS/SSS & [DL RS] & PBCH — S11

System Information Reception — PDCCH/PDSCH (BCCH) — S12

Random Access Procedure — PRACH (S13), PDCCH/PDSCH (S14), PUSCH (S15), PDCCH/PDSCH (S16)

General DL/UL Tx/Rx — PDCCH/PDSCH (S17), PUSCH/PUCCH (S18)

- DL/UL HARQ-ACK
- UE CSI report via PUSCH and/or PUCCH

EP 4 668 902 A1

# FIG. 7

UE                                                                    BS

Msg1 on PRACH: preamble

Msg2 on PDSCH: random access response
(resource allocation)

Msg3 on PUSCH: scheduled transmission
(RRC Connection Request)

Msg4 on PDSCH: contention resolution
(RRC Connection Setup)

(a)

UE                                                                    BS

MsgA: preamble + payload

MsgB: random access response
(resource allocation)

(b)

# FIG. 8

Slot                          Slot                          Slot

PDSCH                      PDSCH                        PDSCH

| P D C C H | | | | | | | | | | | | | | | | | | | | | | | |

Symbol index  0 1 2 3 4 ...        0 1 2 3 4 ...        0 1 2 3 4 ...

$K_0=0$, S=7, L=7,          $K_0=1$, S=4, L=4,          $K_0=2$, S=1, L=9,
PDSCH Mapping Type B        PDSCH Mapping Type B        PDSCH Mapping Type A

▨ Symbol containing DMRS          ▦ Symbol containing PDSCH

(a) Example of PDSCH time domain resource allocation

Slot                          Slot                          Slot

PUSCH                        PUSCH

| P D C C H | | | | | | | | | | | | | | | | | | | | | | | |

Symbol index  0 1 2 3 4 ...        0 1 2 3 4 ...        0 1 2 3 4 ...

$K_2=1$, S=2, L=10,          $K_2=2$, S=0, L=12,
PUSCH Mapping Type B          PUSCH Mapping Type A

▨ Symbol containing DMRS          ▦ Symbol containing PUSCH

(b) Example of PUSCH time domain resource allocation

EP 4 668 902 A1

43

# FIG. 9

(a) Transmitter

(b) Receiver

EP 4 668 902 A1

# FIG. 10

(a) Transmitter

(b) Receiver

# FIG. 11

| | |
|---|---|
| Trigger power headroom reporting | S1102 |
| Determine PH for serving cell | S1104 |
| Transmit PHR for serving cell(s) through PUSCH | S1106 |

# FIG. 12

Pmax

PH

Transmission power based on actual transmission

(a)

Pmax'

PH

Transmission power based on reference format (i.e., virtual transmission)

(b)

# FIG. 13

EP 4 668 902 A1

# FIG. 14

slot index: n, n+1, n+2, n+3, n+4, n+5, n+6, n+7, n+8

Cell c | | | | | | Refence time | | | CG (PHR)

PHR TRIGGER

PUSCH processing time

PHR Window

# FIG. 15

Receive RRC configuration(s) for PUSCH and PHR — S1501

Receive UL grant — S1503

Switch UL waveform based on indication — S1505

Select power control parameter(s) according to waveform — S1506

Generate PHR according to selected power control parameter(s) — S1508

# FIG. 16

Transmit RRC configuration(s) for PUSCH and PHR — S1601

Determine waveform, assuming PH of UE — S1603

Transmit UL grant with determined waveform indication — S1605

Receive PHR — S1606

# FIG. 17

UE                                                                    BS

PUSCH/DWS-related RRC parameters            S1701

UL power control-related RRC parameters     S1702

UL grant with DWS indicator                 S1703

Determine power control
parameter(s) based on          S1704
waveform

S1705          PUSCH with PHR

# FIG. 18

Receive power control parameter per waveform — S1801

Receive UL grant with DWS indicator — S1803

Determine power control parameter for UL transmission based on DWS indicator — S1805

# FIG. 19

Transmit power control parameter per waveform — S1901

Transmit UL grant with DWS indicator — S1903

Receive UL transmission based on DWS indicator — S1905

EP 4 668 902 A1

## INTERNATIONAL SEARCH REPORT

International application No.

**PCT/KR2024/095324**

| A. | CLASSIFICATION OF SUBJECT MATTER |
|---|---|

**H04W 52/14**(2009.01)i; **H04W 52/10**(2009.01)i; **H04W 52/36**(2009.01)i; **H04W 52/54**(2009.01)i; **H04W 72/231**(2023.01)i; **H04L 27/00**(2006.01)i

According to International Patent Classification (IPC) or to both national classification and IPC

| B. | FIELDS SEARCHED |
|---|---|

Minimum documentation searched (classification system followed by classification symbols)

H04W 52/14(2009.01); H04L 1/18(2006.01); H04L 27/26(2006.01); H04W 72/04(2009.01); H04W 72/12(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 파형(waveform), 타입(type), 전력(power), 하향링크 제어 정보(downlink control information, DCI), 변환(transform) 프리코더(precoder), 상향링크(uplink)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | SONY. Further considerations on dynamic waveform switching for NR UL. R1-2211631. 3GPP TSG RAN WG1 Meeting #111. Toulouse, France. 07 November 2022. See sections 1-4. | 1-17 |
| A | QUALCOMM INCORPORATED. Dynamic Switching between CP-OFDM and DFT-S-OFDM. R1-2212147. 3GPP TSG RAN WG1 Meeting #110bis-e. Toulouse, France. 07 November 2022. See sections 2-4. | 1-17 |
| A | US 2021-0250970 A1 (DATANG MOBILE COMMUNICATIONS EQUIPMENT CO., LTD.) 12 August 2021 (2021-08-12) See paragraphs [0081]-[0155]; and figure 1. | 1-17 |
| A | US 2022-0086913 A1 (TELEFONAKTIEBOLAGET LM ERICSSON (PUBL)) 17 March 2022 (2022-03-17) See paragraphs [0107]-[0120]. | 1-17 |

| ✓ | Further documents are listed in the continuation of Box C. | ✓ | See patent family annex. |
|---|---|---|---|

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **31 May 2024** | **31 May 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

52

## INTERNATIONAL SEARCH REPORT

International application No.

**PCT/KR2024/095324**

### C.    DOCUMENTS CONSIDERED TO BE RELEVANT

| Category* | Citation of document, with indication, where appropriate, of the relevant passages | Relevant to claim No. |
|---|---|---|
| A | US 2022-0376965 A1 (TELEFONAKTIEBOLAGET LM ERICSSON (PUBL)) 24 November 2022 (2022-11-24)<br>      See claims 57-76. | 1-17 |

Form PCT/ISA/210 (second sheet) (July 2022)

## INTERNATIONAL SEARCH REPORT
### Information on patent family members

International application No.

**PCT/KR2024/095324**

| Patent document cited in search report | | | Publication date (day/month/year) | Patent family member(s) | | | Publication date (day/month/year) |
|---|---|---|---|---|---|---|---|
| US | 2021-0250970 | A1 | 12 August 2021 | CN | 110798286 | A | 14 February 2020 |
| | | | | CN | 110798286 | B | 11 August 2020 |
| | | | | EP | 3833145 | A1 | 09 June 2021 |
| | | | | JP | 2021-532705 | A | 25 November 2021 |
| | | | | JP | 7152608 | B2 | 12 October 2022 |
| | | | | KR | 10-2021-0028708 | A | 12 March 2021 |
| | | | | US | 11166299 | B2 | 02 November 2021 |
| | | | | WO | 2020-024855 | A1 | 06 February 2020 |
| US | 2022-0086913 | A1 | 17 March 2022 | CN | 113767700 | A | 07 December 2021 |
| | | | | EP | 3903536 | A1 | 03 November 2021 |
| | | | | EP | 3903536 | B1 | 01 November 2023 |
| | | | | JP | 2022-515710 | A | 22 February 2022 |
| | | | | JP | 2023-036614 | A | 14 March 2023 |
| | | | | JP | 7190038 | B2 | 14 December 2022 |
| | | | | MX | 2021007155 | A | 16 August 2021 |
| | | | | WO | 2020-136024 | A1 | 02 July 2020 |
| US | 2022-0376965 | A1 | 24 November 2022 | EP | 4029173 | A1 | 20 July 2022 |
| | | | | WO | 2021-047973 | A1 | 18 March 2021 |

Form PCT/ISA/210 (patent family annex) (July 2022)